(19)

**Europäisches Patentamt**

**European Patent Office**

**Office européen des brevets**

(11) **EP 4 672 104 A1**

(12) **EUROPEAN PATENT APPLICATION**

(43) Date of publication:
31.12.2025 Bulletin 2026/01

(21) Application number: 25186044.1

(22) Date of filing: 27.06.2025

(51) International Patent Classification (IPC):
G06Q 10/06 (2023.01)          G05B 23/02 (2006.01)
G06F 11/00 (2006.01)          G06Q 10/20 (2023.01)
G06F 11/07 (2006.01)

(52) Cooperative Patent Classification (CPC):
G06Q 10/20; G05B 23/0283; G06F 11/0793;
G06Q 10/06; G06Q 10/06393

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.06.2024 US 202418757553**

(71) Applicant: **Honeywell International Inc.
Charlotte, NC 28202 (US)**

(72) Inventor: **KRISHNASWAMY, Meenakshi
Sundaram
Charlotte, 28202 (US)**

(74) Representative: **Haseltine Lake Kempner LLP
Cheapside House
138 Cheapside
London EC2V 6BJ (GB)**

(54) **AUTONOMOUS MAINTENANCE MANAGEMENT OF A FACILITY**

(57)     Techniques for autonomous maintenance management (AMM) of an industrial facility are described. In one aspect, an AMM system monitors operational data values and an event associated with an equipment to determine key performance indicators and trend patterns associated with the equipment, where the event is characterized by deviations in the operational data values from a pre-determined threshold value, and where the trend pattern is indicative at least of operational history of the equipment. The KPIs and trend patterns are analysed to predict a behaviour of the equipment, based on which a dynamic maintenance schedule is generated, where the dynamic maintenance schedule includes a task to be executed for maintenance of the equipment. Further, the system obtains personnel information of the industrial facility to identify personnel to perform the task and accordingly issues a maintenance work order in correspondence to the dynamic maintenance schedule for maintenance of the equipment.

Fig. 1

EP 4 672 104 A1

**Description**

TECHNICAL FIELD

The present subject matter relates, in general, to maintenance management of a facility in a supply chain, and in particular, to autonomous maintenance management of an industrial facility.

BACKGROUND

Managing and monitoring equipment in a facility, such as an industrial facility, is performed to ensure that all the equipment of the industrial facility work in an efficient and reliable manner. The lifecycle of an equipment, from installation to disposal, goes through various changes, as the equipment is subjected to different environmental and physical factors which result in altering the performance of the equipment. These changes are monitored to understand when and how maintenance is to be carried out for the equipment. Also, since the reliability of the equipment tends to decrease over time, different types of maintenance, such as proactive maintenance, predictive maintenance, and preventive maintenance are performed to extend the life of an equipment.

SUMMARY

Aspects of the present subject matter provide techniques for autonomous maintenance management of an industrial facility.

According to an example of the present subject matter, a method for autonomous maintenance management of an industrial facility is provided. The method includes monitoring, by the AMM system, at least one of operational data values and an event associated with an equipment of the industrial facility to determine key performance indicators and a trend pattern corresponding to the equipment, where the event is characterized by deviations in the operational data values from a pre-determined threshold value, and where the trend pattern is indicative at least of operational history of the equipment. Further, the method includes predicting a behavior of the equipment, by the AMM system, based on at least one of the key performance indicators and the trend pattern corresponding to the equipment. On predicting the behavior of the equipment, the method includes generating, by the AMM system, a dynamic maintenance schedule for the equipment in correspondence to at least the predicted behavior of the equipment, where the dynamic maintenance schedule includes a task to be executed for maintenance of the equipment. Furthermore, the method includes obtaining, by the AMM system, personnel information of the industrial facility to identify personnel to perform the task to be executed. Further, a maintenance work order is issued in correspondence to the dynamic maintenance schedule to the personnel of the industrial facility for maintenance of the equipment.

According to another example of the present subject matter, a system for autonomous maintenance management of a facility is provided. The system includes a Maintenance Request Optimizer (MRO). The MRO is configured to receive key performance indicators and a trend pattern associated with an equipment of the industrial facility, where the key performance indicators are determined from at least one of operational data values and an event associated with the equipment, where event is characterized by deviations in the operational data values from a pre-determined threshold value, and wherein the trend pattern is indicative at least of operational history of the equipment. Further, the MRO is to receive a predictive behavior based on at least one of the key performance indicators and the trend pattern corresponding to the equipment. The MRO is configured to generate a dynamic maintenance schedule for the equipment in correspondence to at least the predicted behavior of the equipment, where the dynamic maintenance schedule includes a task to be executed for maintenance of the equipment. Further, the MRO obtains personnel information of the industrial facility to identify personnel to perform the task to be executed. Thereafter, the MRO issues a maintenance work order in correspondence to the dynamic maintenance schedule to the personnel of the industrial facility for maintenance of the equipment.

According to another example of the present subject matter, a non-transitory computer readable medium containing program instruction is provided, that, when executed, causes the processor to monitor operational data values and an event associated with an equipment of the industrial facility to determine key performance indicators and a trend pattern corresponding to the equipment, where the event is characterized by deviations in the operational data values from a pre-determined threshold value, and where the trend pattern is indicative at least of operational history of the equipment, predict a behavior of the equipment based on at least one of the key performance indicators and the trend pattern corresponding to the equipment, generate a dynamic maintenance schedule for the equipment in correspondence to at least the predicted behavior of the equipment, where the dynamic maintenance schedule includes a task to be executed for maintenance of the equipment, obtain personnel information of the industrial facility to identify a personnel to perform the task to be executed, and issue a maintenance work order in correspondence to the dynamic maintenance schedule to the personnel of the industrial facility for maintenance of the equipment.

BRIEF DESCRIPTION OF DRAWINGS

The detailed description is described with reference to the accompanying figures. In the figures, the left-most digit(s) of a reference number identifies the figure in which the reference number first appears. The same numbers are used throughout the drawings to reference like features and components.

Fig. 1 illustrates a supply chain network environment, in accordance with an example implementation of the present subject matter.

Fig. 2 illustrates an example supply chain network, in accordance with an example implementation of the present subject matter.

Fig. 3 illustrates an autonomous maintenance management (AMM) system, in accordance with an example implementation of the present subject matter.

Fig. 4 illustrates an assessment module of the AMM system, in accordance with an example implementation of the present subject matter.

Fig. 5 illustrates a Maintenance Request Optimizer (MRO), in accordance with an example implementation of the present subject matter.

Fig. 6 illustrates task execution and providing feedback, in accordance with an example implementation of the present subject matter.

Fig. 7 illustrates an example for autonomous maintenance management, in accordance with an example implementation of the present subject matter.

Fig. 8 illustrates a method for maintenance strategy evaluation, in accordance with an example implementation of the present subject matter.

Fig. 9 illustrates an example method for autonomous maintenance management in an industrial facility, in accordance with an example implementation of the present subject matter.

Fig. 10 illustrates another example method for autonomous maintenance management in an industrial facility, in accordance with an example implementation of the present subject matter.

Fig. 11 illustrates a non-transitory computer-readable medium for autonomous maintenance management of an industrial facility, in accordance with an example implementation of the present subject matter.

DETAILED DESCRIPTION

The present subject matter relates to techniques for optimizing and automating maintenance management of a facility. Maintenance management of equipment in the facility impacts the overall productivity and profitability of the facility, where a facility may be a unit or a part of a supply chain network. Typically, facilities, for example, industrial facilities have a team of personnel dedicated to scheduling and conducting maintenance of equipment and processes to ensure that the production goals of the facility are met, while maintaining the equipment in their optimal condition. Scheduling of maintenance activities associated with repairing, replacing, overhauling, inspecting, servicing, adjusting, testing, measuring, and detecting faults to avoid any failure which would possibly result in interruption of production operation, makes maintenance management an intricate process, where each equipment has to be analyzed to strategize the maintenance.

Traditional approaches for strategizing maintenance rely on manual inspection and analysis of equipment. Since strategizing maintenance is performed manually, correlating data in real-time for optimizing maintenance, identifying cascading effects of a symptom or a fault in one equipment, and the like is challenging and may sometimes be delayed because of large amounts of data is to be considered. Also, manual approaches are time intensive, are cumbersome, and are also prone to errors, resulting in suboptimal maintenance of the equipment. For instance, a technician might overlook subtle signs of wear on a conveyor belt, leading to an unexpected breakdown during peak production hours, or a maintenance planner may not schedule regular updates to software systems, leading to vulnerabilities and system inefficiencies. Further, inefficient maintenance of equipment can be cost intensive since maintenance can be associated with several overheads, such as production downtime cost, spares cost, labor cost, opportunity cost, and the like.

Additionally, each facility of the supply chain may operate disparate, isolated systems such as CMMS (Computerized Maintenance Management System), EAM (Enterprise Asset Management), APM (Asset Performance Management), and the like, where such systems are limited to the operational information associated with the concerned facility alone. For example, in an enterprise involving hundreds of such facilities located at different geographical locations, obtaining, integrating, and monitoring the data holistically is challenging. For example, to efficiently maintain various equipment within each facility of the enterprise, each of these systems may be configured to monitor and update data onto their management systems using different methods and formats. For example, one facility may monitor data using fairly obsolete platforms, whereas another facility of the same supply chain may monitor data through an advanced platform. Therefore, to facilitate optimizing maintenance and maintenance management at the enterprise level, collation, and integration of data from various facilities of a supply chain is desirable. Also, since equipment of different facilities of the supply chain network are generally sourced from various vendors with varied specifications; assessing, analyzing, and accordingly optimizing the maintenance of the entire industrial supply chain network as a whole could be challenging.

Furthermore, with the retirement of skilled technicians, or with movement of resources, such as personnel leaving, or with introduction of new resources and the like, there is a concern to ensure that their expert knowledge and insights are not lost but are instead comprehensively captured and documented. For example, a senior technician who has worked for decades at a power generation plant may be set to retire, who has extensive experience with the plants complex control systems, gained through years of hands-on experience and problem solving, that may be lost. This information is particularly valuable for monitoring equipment across the supply chain. With the risk of knowledge attrition due to workforce turnover, enhancing equipment reliability through refined maintenance tasks can be challenging.

According to examples of the present subject matter, an automated maintenance management (AMM) system is provided to optimize and automate maintenance management of an industrial facility. In one aspect, the AMM system monitors various equipment within each facility of a supply chain network in real-time and analyzes their performance, health, and the remaining useful life. Based on such an analysis, a dynamic maintenance schedule is generated to meet the maintenance demand of the facility, improve the performance of the facility, improve the reliability of the equipment within the said facility, and also reduce the operating costs of the facility. Moreover, based on the dynamic maintenance schedule, the AMM system may issue work orders to appropriate personnel across facilities to execute, for example, one or more maintenance tasks associated with an equipment. The AMM system may interface with external systems of multiple facilities for issuing such work orders. Subsequently, learnings from execution of the work orders are recorded as feedback and are analyzed to further refine the overall maintenance strategy to optimize maintenance management. The AMM system may also develop training programs for operators and technicians to enhance their proficiency.

In operation, the AMM system monitors operational data values and an event associated with an equipment of the industrial facility to determine key performance indicators and a trend pattern corresponding to the equipment. For example, operation data values of an equipment may correspond to physical parameters of the equipment, such as, temperature, load bearing capacity, pressure, number of hours the equipment is in a running condition, number of hours in certain faulty conditions, and the like, and an event may be characterized by deviations in the operational data values from a pre-determined threshold value. In one example, the operational data values corresponding to the equipment may be compared with original equipment manufacturer (OEM) specifications and performance data to establish a performance baseline for the equipment. A deviation from the pre-determined threshold values determined by the OEM specification and performance data may be characterised as an event. For instance, on considering an example of a hydraulic press, operational data values, such as temperature, vibration, pressure, and production output of the press may be monitored. In an instance, the AMM system may detect that the temperature sensor readings for the press are higher than the pre-determined temperature threshold value. This deviation in the temperature sensor readings from the pre-determined temperature threshold value may be detected as an anomaly and characterized as an event associated with the hydraulic press.

Further, based on the one or more operational data values and events associated with the equipment, the key performance indicators and a trend pattern corresponding to the equipment are determined. Key Performance Indicators (KPIs) are quantifiable measures that are used to evaluate the equipment performance and the trend pattern is indicative at least of operational history of the equipment. In one example, key performance indicators are determined by performing at least one of a parameter analysis of the operational data values, a fault analysis of the equipment, and a reliability analysis of the equipment. For example, KPIs may include energy consumption depicting the amount of energy used per cycle or per unit of production, production output depicting the number of parts produced by the hydraulic press in a given time period, cycle time being the time it takes to complete one full cycle of the hydraulic press, and the like. Further, trend patterns may indicate patterns associated with temperature, vibration, pressure, and production output data values recorded in the past for the hydraulic press, events where similar temperature deviations were observed or recorded and the like. For instance, the trend pattern may indicate that in the past year, an abnormality in the temperature of the hydraulic fluid was observed and may also indicate that the reason for such high temperatures of the hydraulic fluid was caused due to overheating of the piston.

Further, the AMM system may predict a behavior of the equipment based on at least one of the key performance indicators and the trend pattern corresponding to the equipment. For example, the predicted behavior of the equipment may indicate a probable failure in the next three days due to overheating.

On predicting the behavior of the equipment, the AMM system determines a dynamic maintenance schedule for the equipment. In one example, the dynamic maintenance schedule includes a task to be executed for maintenance of the equipment. For instance, the dynamic maintenance schedule may include tasks such as inspecting the cooling system to ensure they are functioning correctly and are not clogged or damaged, or to perform a fluid analysis where a sample of the hydraulic fluid is taken for analysis to check for contamination, degradation, or other properties that could contribute to excessive heating, or for component replacement where any faulty components, or to check for leaks in the hydraulic system that can lead to low fluid levels, which can cause overheating and the like.

In one example, the AMM system may generate the dynamic maintenance schedule at predefined time intervals.

For example, the dynamic maintenance schedule may be configured to generate a maintenance schedule at pre-defined time intervals, for example, every 24 hours, or the like. Also, in a scenario where an anomaly is encountered, which was not factored in while the dynamic maintenance schedule was first generated, the dynamic maintenance schedule may be re-generated to accommodate actions to be taken to address the anomaly in real time.

On generating the dynamic maintenance schedule, the AMM system obtains personnel information of the facility to identify the right personnel to perform the task to be executed. In one example, all the skills associated with the personnel of the facility, performance of the personnel, working shifts, labor cost, and the like may be gathered and analyzed to determine personnel best suited to execute the maintenance work order by the AMM system.

On identifying specific personnel to perform the task, the AMM system issues a maintenance work order, in correspondence to the dynamic maintenance schedule. In one example, the maintenance work order may be issued in a format compatible with a Computerized Maintenance Management System (CMMS) of the industrial facility to facilitate seamless integration with external systems of the said facility. Subsequently, in one example, feedback from the personnel corresponding to the task executed may be received. The feedback from execution of maintenance task may be considered while generating future maintenance schedules, which makes this technique dynamic in nature. For example, after a maintenance technician inspects the hydraulic press and performs the recommended service, feedback on executing the maintenance task including the actual cause of the temperature deviations and the actions taken may be provided to the AMM system. This feedback may be recorded by the AMM system to refine future event detection and maintenance suggestions. In one example, a training program to train the personnel in a manner in which the task is to be executed may also be determined by the AMM system. By integrating task execution feedback into the training content, the AMM system ensures that the training remains relevant and practical, directly contributing to the continuous improvement of maintenance operations and personnel skill sets.

Therefore, techniques of the present subject matter facilitate self-governed maintenance of the industrial facility in an efficient and optimal manner. Dynamic maintenance schedules generated in real-time with active participation of personnel involved in the maintenance of equipment extend the lifecycle of the equipment and improve the overall reliability of industrial plant, in turn reducing the operating costs that may be incurred. Additionally, allocation of a task to the right personnel, at the right time minimizes the probable loss as well as the costs associated, that may be incurred. Furthermore, techniques of the present subject matter include operator trainings in addition to autonomous maintenance in order to provide a comprehensive approach to equipment maintenance i.e., without systemic breakdowns, small stops or slow running, defects, and the like, thereby ensuring a safe working environment.

The above and other features, aspects, and advantages of the subject matter will be explained with regard to the following description and accompanying figures. It should be noted that the description and figures merely illustrate the principles of the present subject matter along with examples described herein and should not be construed as a limitation to the present subject matter. It is thus understood that various arrangements may be devised that, although not explicitly described or shown herein, embody the principles of the present disclosure. Moreover, all statements herein reciting principles, aspects, and examples thereof, are intended to encompass equivalents thereof. Further, for the sake of simplicity, and without limitation, the same numbers are used throughout the drawings to reference like features and components.

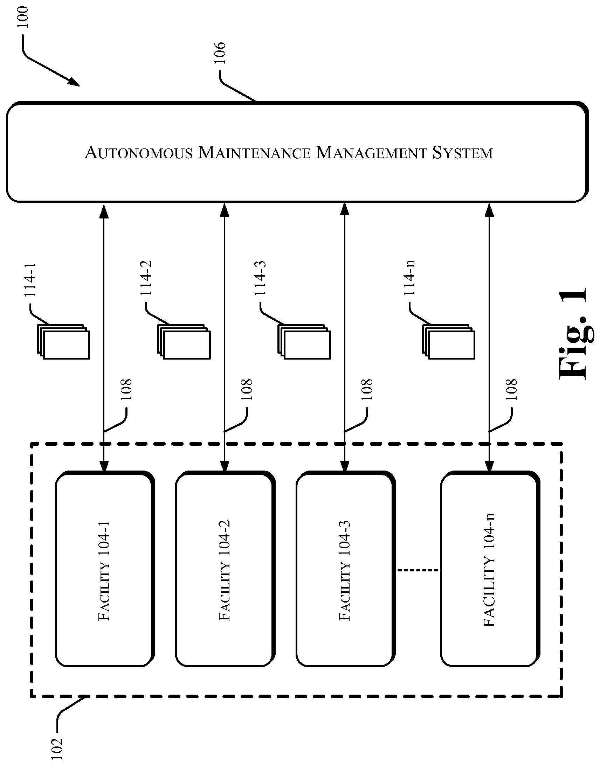

Fig. 1 illustrates a supply chain network environment 100, in accordance with an example implementation of the present subject matter. In one example, the supply chain network environment 100 may include a supply chain network 102 including multiple facilities, 104-1, 104-2, 104-3, ....104-n, collectively and alternatively referred to as multiple facilities 104 or facility 104. For example, but not limited to, the facility 104 may be a warehouse in a packaging industry, an industrial plant, an assembling unit of an automobile manufacturing company, a consumer-goods manufacturing unit, an e-commerce storage unit, a cold storage of a food manufacturing company, a pharmaceutical manufacturing unit, a distributer of a logistics company, and the like. In one example, the multiple facilities 104 may be distributed across different locations in the supply chain network 102.

Each facility of the multiple facilities 104 may include a facility management system (not shown in the figure). In one example, the facility management system may be employed in each facility 104 for maintenance management. In one example, the facility management system may be part of a source device (not shown in the figure), where the source device may be an Internet of things (IOT) device, a computing device, a personal computer, a laptop, a tablet, a mobile phone, and the like. In another example, the facility management system may be hosted on a server (not shown in the figure) that may communicate with the source device.

In one example, the facility management system of each of the multiple facilities 104 may be communicatively coupled to an autonomous maintenance management (AMM) system 106. The facility management systems and the AMM system 106 may communicate over a network 108. The network 108 may be a wireless network or a combination of a wired and wireless network. The network 108 can also include a collection of individual networks, interconnected with each other and functioning as a single large network, such as the Internet. Examples of such individual networks include, but are not limited to, Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), Public Switched Telephone Network (PSTN), Long Term Evolution (LTE), and Integrated Services Digital Network (ISDN). Depending on the terminology, the communication network includes various network entities, such as gateways and routers; however, such details have been omitted to maintain the brevity of the description.

Further, the AMM system 106 may be implemented in any computing system, such as a storage array, a server, a desktop or a laptop, a computing device, a distributed computing system, or the like. Although not depicted, the AMM system 106 may include other components, such as interfaces to communicate over the network or with external storage or computing devices, display, input/output interfaces, operating systems, applications, data, and other software or hardware components (not depicted for the sake of brevity).

In one example, the AMM system 106 may obtain data 114-1, 114-2, 114-3, ..., 114-n, collectively referred to as data 114, from multiple facilities 104-1, 104-2, 104-3, ....104-n, respectively. In one example, the data 114 generated by the multiple facilities 104, amongst other information, may include information associated with the equipments, processes, and personnel of the facility. For example, in a facility, such as an industrial plant, the data 114 could indicate different types of equipments commissioned in the plant, equipments that are yet to be commissioned, maintenance logs of the various equipments, personnel data, working schedules of each personnel, operating hours of the plant, historical data associated with the equipments, data associated with past events, historical failure pattern data, historical trend data, data associated with the operating systems utilized by the facility management system of the plant, faults that have occurred with an equipment in the past, nameplate details of the equipments of the plant, operating conditions for each of these equipments, equipment operating data, equipment health assessment reports, the costs associated with various equipment, processes and personnel of the facility, and the like.

Upon receiving the data 114 from the facilities 104 within the supply chain network 102, the AMM system 106 may analyze the data 114 to perform an autonomous and automated maintenance throughout the supply chain network 102. In one example, the AMM system 106 may monitor and evaluate the data 114 obtained from various equipments within the facility to assess their operational performance, health status, and remaining useful life. Based on this evaluation, historical trend data, and outcomes of previous maintenance actions, the AMM system 106 may generate a dynamic maintenance schedule for each facility 104, aimed at achieving targeted reliability levels at an optimized cost, thereby enhancing the efficiency of the supply chain network 102 as a whole.

Based on the dynamic maintenance schedule, the AMM system 106 may generate targeted work orders that include, for example, one or more maintenance tasks. In some cases, the AMM system 106 may access personnel records for the relevant facility 104 to identify the appropriate personnel to execute the work order, ensuring that tasks are allocated to individuals with the requisite skills and experience. In one example, subsequent to the completion of the work order, the AMM system 106 may further collect feedback from the personnel involved in the maintenance task. This feedback may then be utilized by the AMM system 106 to further refine the maintenance strategy for the facility, allowing for continuous improvement in maintenance operations.

Additionally, the AMM system 106 may analyze the execution details of the maintenance task to identify areas of skill development and update a training module in correspondence to the task executed. Accordingly, the AMM system 106 may generate customized training programs or modules that address specific challenges encountered during the task execution. Such programs may be provided to personnel of the facility, for example, to training operators and technicians of the supply chain network 102, where the training programs may be updated with practices that align with the latest maintenance practices and insights ensuring that future maintenance tasks are performed with increased efficiency and effectiveness.

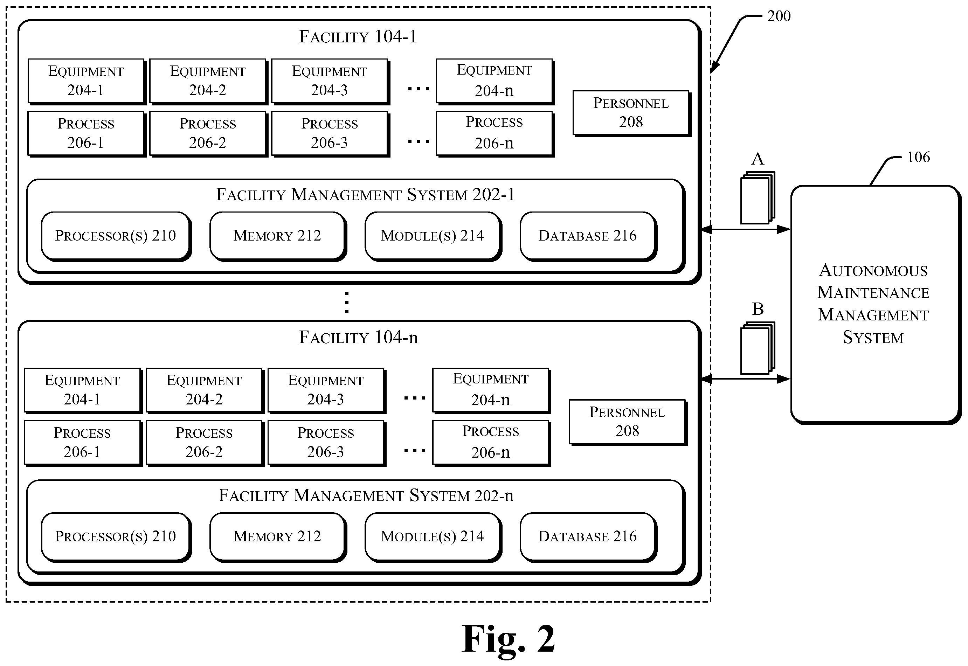

Fig. 2 illustrates an example supply chain network 102, in accordance with an example implementation of the present subject matter. In one example, the supply chain network 200 depicts Facility 104-1 and Facility 104-n communicatively coupled to the AMM system 106. For the sake of simplicity, the following description has been predominantly discussed with reference to Facility 104-1 and Facility 104-n of the supply chain network 200, communicatively coupled to the AMM system 106. However, similar principles may be applicable to all facilities of a supply chain network 200 coupled to the AMM system 106.

In one example, Facility 104-1 of the supply chain network 200 may be located in a first geographical location and Facility 104-n may be located in a second geographical location of the supply chain network 200. Each of the facilities, Facility 104-1, and Facility 104-n, may include a facility management system 202-1, 202-n, respectively. In one example, the facility management system 202-1 of Facility 104-1 and the facility management system 202-n of Facility 104-n may be communicatively coupled to the AMM system 106.

Further, Facility 104-1 and Facility 104-n within the supply chain network 102 may include a plurality of equipments 204-1, 204-2, 204-3, ... 204-n collectively referred to as equipment 204, a plurality of processes 206-1, 206-2, 206-3, ... 206-n, collectively referred to as processes 206, and personnel 208, each associated with the various operations of the facility, respectively. Data A and data B from each of these equipments, processes, and personnel may be collected by the facility management systems 202-1 and 202-n, respectively.

For the sake of simplicity, the following description has been discussed with reference to the facility management system 202-1 of Facility 104-1, of the supply chain network 102. However, it may be understood that similar principles may be applicable to all other facilities 104 of the supply chain network 102. In one example, the facility management system 202-1 includes a processor 210 and a memory 212. The processor(s) 210 may be provided through the use of dedicated hardware as well as hardware capable of executing instructions. When provided by a processor, the functions may be provided by a single dedicated processor, by a single shared processor, or by a plurality of individual processors, some of which may be shared. Moreover, explicit use of the term "processor" would not be construed to refer exclusively to hardware capable of executing instructions, and may implicitly include, without limitation, digital signal processor (DSP) hardware, network processor, application specific integrated circuit (ASIC), field programmable gate array (FPGA), read only memory (ROM) for storing instructions, random access memory (RAM), non-volatile storage. Other hardware, standard and/or custom, may also be included. The memory 212 may include any computer-readable medium including, for example, volatile memory (e.g., RAM), and/or non-volatile memory (e.g., EPROM, flash memory, etc.).

The facility management system 202-1 may further include modules 214, such as maintenance module, asset monitoring module, process flow control module, data integration module, employee module, and the like (not shown). In one example, the modules 214 may be implemented as a combination of hardware and firmware. In examples described herein, such combinations of hardware and firmware may be implemented in several different ways. For example, the firmware for the module 214 may be processor 210 executable instructions stored on a non-transitory machine-readable storage medium and the hardware for the module 214 may include a processing resource (for example, implemented as either a single processor or a combination of multiple processors), to execute such instructions.

In the present examples, the machine-readable storage medium may store instructions that, when executed by the processing resource, implement the functionalities of the modules 214. In such examples, the facility management system 202-1 may include the machine-readable storage medium storing the instructions and the processing resource to execute the instructions. In other examples of the present subject matter, the machine-readable storage medium may be located at a different location but accessible to the facility management system 202-1 and the processor(s) 210.

The facility management system 202-1 may further include a database 216, that serves, amongst other things, as a repository for storing data A that may be fetched, processed, received, or generated by the modules. For example, but not limited to, data A associated with the equipments 204 of Facility 104-1 may include information regarding the performance metrics of each equipment such as operational efficiency, energy consumption rates, and output quality, data associated with condition monitoring of each equipment of the facility, such as vibration levels, temperature readings, acoustic emissions, lubricant data, voltage measurements, current measurements, loading, etc., calibration details of different equipments such as dates of last calibration, calibration parameters, and deviations from standard settings, energy consumption of different equipments utilized in the facility, maintenance records, historical maintenance logs, downtime incidents, parts replacement logs, sensor readings such as pressure values, flow rates, electrical current measurements, rotational speeds, and the like. Further, data A associated with processes of Facility 104-1 may include, for example, cycle times, throughput rates, yield percentages, quality control data such as defect rates, rework instances, and product quality assessments, operating conditions for each process stage, process flow data such as material usage rates, waste generation statistics, and energy utilization for each process step, data associated with environmental monitoring such as emissions data, effluent quality, and ambient conditions within the process area, time taken to complete a process, idle time of personnel working on the process, a percentage of completion of the targets set for the day, and the like. Similarly, data A associated with personnel of Facility 104-1 may include information regarding every personnel working in the facility, which personnel is assigned with which work, how many people have been assigned for a task, data associated with work schedules such as shift patterns, overtime hours, and staffing levels for each department, data associated with skill assessments such as qualifications, certifications, and training completion records for each employee, performance metrics such as individual productivity rates, error rates, and contributions to process improvements, attendance records such as absenteeism rates, leave balances, and punctuality data, safety records such as incidents of safety violations, participation in safety drills, and personal protective equipment (PPE) usage compliance, and the like.

In one example, the facility management system 202a of Facility 104-1 may integrate and store all the data A collected from multiple equipments, processes, and personnel, as data 316 of the facility management system 202a. Similarly, data B from the plurality of equipments 204, processes 206, and personnel 208 associated with Facility 104-n of the supply chain network 102 may be collected and stored in the facility management system 202-n. In one example, data A from Facility 104-1, data B from Facility 104-n of the supply chain network 102 may be communicated to AMM system 106.

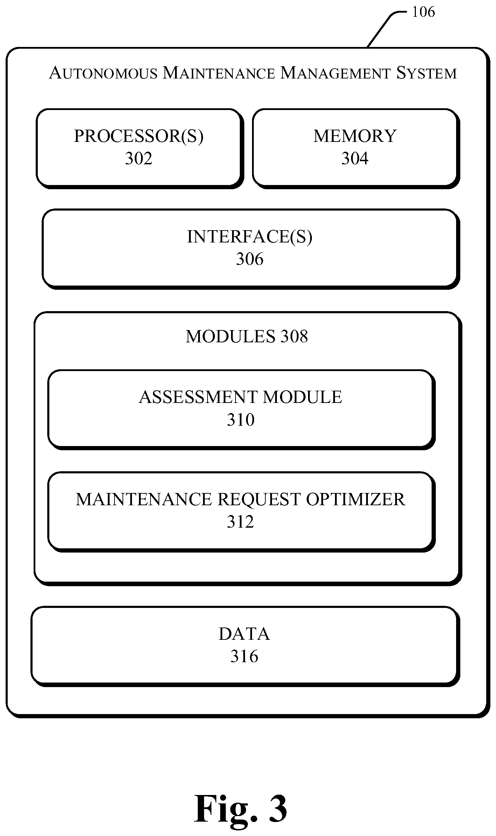

Based on such data obtained from the facility management systems 202-1 and 202-n, the AMM system 106 may analyze the data to generate a dynamic maintenance schedule for Facility 104-1 and Facility 104-n, respectively. In one example, the AMM system 106 may analyze the data to generate a dynamic maintenance schedule for the supply chain network 200 to optimize maintenance schedules, improve process efficiency, and enhance personnel management, leading to increased reliability and reduced operational costs in industrial facilities. The autonomous maintenance management system 106 has been discussed with reference to Fig. 3.

Fig. 3 illustrates an autonomous maintenance management (AMM) system 106, in accordance with an example implementation of the present subject matter. The AMM system 106, alternatively referred to as system 106, is to facilitate self-governed maintenance of the facility in an efficient and optimal manner. The facility, such as an industrial facility, may include multiple equipments and processes. For example, but not limited to, equipments of the facility may include conveyor belts, computer-controlled machines for precise cutting, milling, drilling, and the like, hydraulic presses, boilers, HVAC systems, pumps, motors, generators, compressors, spectrometers, air scrubbers, spill containment systems, and the like. Similarly, processes of the industrial facility may include assembly line productions where a product is assembled in a step-by-step manner as it moves along a conveyor belt or through a sequence of workstations, continuous flow productions, maintenance processes, inspection and testing, statistical process control, inventory management, and the like. These equipments and processes across multiple facilities are analyzed and accordingly maintained dynamically to enhance the performance and reliability of facility at optimal costs.

In one example, the AMM system 106 may include a processor 302 and a memory 304 coupled to the processor 302. The functions of functional block labelled as "processor(s)", may be provided through the use of dedicated hardware as well as hardware capable of executing instructions. When provided by a processor, the functions may be provided by a single dedicated processor, by a single shared processor, or by a plurality of individual processors, some of which may be shared. Moreover, explicit use of the term "processor" would not be construed to refer exclusively to hardware capable of executing instructions, and may implicitly include, without limitation, digital signal processor (DSP) hardware, network processor, application specific integrated circuit (ASIC), field programmable gate array (FPGA), read only memory (ROM) for storing instructions, random access memory (RAM), non-volatile storage. Other hardware, standard and/or custom, may also be included. Further, an interface(s) 306 may allow the connection or coupling of the system 106 with one or more other devices (say devices or systems within the supply chain network), through a wired (e.g., Local Area Network, i.e., LAN) connection or through a wireless connection (e.g., Bluetooth®, Wi-Fi). The interface(s) 306 may also enable intercommunication between different logical as well as hardware components of the system 106.

The memory 304 may include any computer-readable medium including, for example, volatile memory (e.g., RAM), and/or non-volatile memory (e.g., EPROM, flash memory, etc.).

The AMM system 106 may further include modules 308, such as an assessment module 310 and a Maintenance Request Optimizer (MRO) 312. In one example, module(s) 308 may further include sub-modules (not represented in the figure). The module(s) 308 and the sub-modules, in one example, may be implemented as a combination of hardware and firmware. In examples described herein, such combinations of hardware and firmware may be implemented in several different ways. For example, the firmware for the module and sub-modules may be processor executable instructions stored on a non-transitory machine-readable storage medium and the hardware for the module may include a processing resource (for example, implemented as either a single processor or a combination of multiple processors), to execute such instructions.

In the present examples, the machine-readable storage medium may store instructions that, when executed by the processing resource, implement the functionalities of the module(s) 308 and sub-modules. In such examples, the AMM system 106 may include the machine-readable storage medium storing the instructions and the processing resource to execute the instructions. In other examples of the present subject matter, the machine-readable storage medium may be located at a different location but accessible to the AMM system 106 and the processor 302.

The AMM system 106 may further include data 316, that serves, amongst other things, as a repository for storing data that may be fetched, processed, received, or generated by the modules 308. The data 316 may include equipment data, process data, facility data, data corresponding to the systems used in each facility of the supply chain, OEM data for all equipments across the supply chain, maintenance logs, event logs, fault tree signatures, various threshold and pre-determined data, personnel data, maintenance schedules, health status data corresponding to various equipment across multiple facilities, and the like. In an example, the data 316 may be stored in the memory 304.

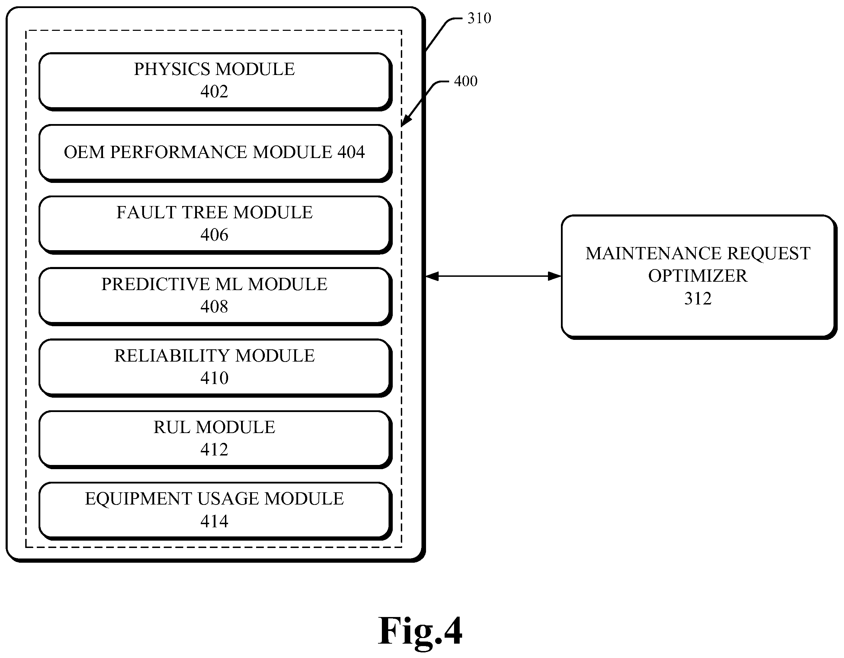

For autonomous maintenance management of the industrial facility, in one example, the assessment module 310 of the AMM system 106 may monitor at least one of one or more operational data values and an event associated with the equipment. In one example, the assessment module 310 may further include sub-modules 400 such as, such as a physics module 402 and an OEM performance module 404 as represented in Fig. 4, in accordance with an example implementation of the present subject matter. In another example, the sub-modules may be a part of another system or may be hosted on a server (not shown in the figure) that may be communicatively accessible to the assessment module 310 of the AMM system 106. Although the following description has been discussed with reference to maintenance of equipments alone, as would be understood, similar principles of the present subject matter would be applicable to processes of the facility as well.

In one example, the physics module 402 of the assessment module 310 may be a first principle-based model that utilizes fundamental physics and chemistry laws to monitor the operational data values of the equipment. An operational data value of the equipment corresponds to a physical parameter of the equipment, such as temperature, acceleration, load bearing capacity, pressure, and the like. The one or more operational data values may be obtained from one or more sensors, or data collection devices coupled to the equipment. In one example, the operational data values may be obtained and monitored in real-time. In another example, the operational data values may be obtained at pre-determined intervals, for example, every 15 minutes or every two hours, and the like.

The operational data values may further be compared with benchmark data corresponding to the said equipment to analyze the performance of the said equipment. In one example, the OEM performance module 404 may compare the operational data values and the benchmark data to analyze the performance of the equipment within the facility. The benchmark data for an equipment may be determined from original equipment manufacturer (OEM) specification and performance data for the said equipment, where benchmark data may be indicative of ideal operation of the equipment. In one example, the OEM specifications and performance data may provide a performance curve or a map that outlines the expected behavior of the equipment when exposed to various internal and external factors, such as temperatures, pressures, loading, and the like.

Further, the one or more operational data values obtained from the equipment may be monitored to identify an anomaly associated with the equipment. In one example, the operational data value may be compared with a pre-determined threshold value to determine a deviation in the one or more operational data values from the pre-determined threshold value. Such a deviation in the operational data values may be indicative of an anomaly and may be characterized as an event associated with the equipment. In one example, the pre-determined threshold values may be determined based on historical operation of the equipment, past events associated with the equipment, and OEM specifications and performance data. In one example, there may be multiple pre-determined threshold values corresponding to an operational parameter of the equipment. For example, the pre-determined threshold values, for an operation parameter such as temperature, may include a first pre-determined threshold value, a second pre-determined threshold value, and the like. When the operational data values being monitored exceed a particular pre-determined threshold, an action corresponding to the threshold value exceeded may be performed. For example, if the operational data values exceed a first pre-determined threshold value, an alert may be issued. Similarly, if the operational data value exceeds the second pre-determined threshold value an alarm may be triggered, and the like. In another example, but not limited to, characterizing the performance of an equipment as normal or abnormal may be performed by using offline simulation techniques. For example, a process and control simulator may analyze the operational data values and event data associated with the equipment, and the like.

In one example, the assessment module 310 may include a fault tree module 406 to obtain and assess data corresponding to the various faults encountered by an equipment, process, or a system, within the facility, in the past. Such data may also include a cause associated with the faults that have occurred in the past, the factors contributing to the fault or sub-faults, an effect of the fault, and the like. Further, a predictive machine learning (ML) module 408 of the assessment module 310 may correlate and analyze historical operational data values and instances of failures associated with each equipment type. Based on such analysis, the predictive ML module may predict a type of event that the equipment may encounter in the future.

In one example, the assessment module 310 may also include a reliability module 410, a remaining useful life (RUL) module 412, and an equipment usage module 414. The reliability module 410 may assess the likelihood of an equipment performing its intended function without failure over a specified period of time. In one example, the reliability module 410 may perform such an assessment based on historical failure data associated with the equipment or similar equipments in order to estimate failure rates associated with the equipment. In one example, based on the failure rates estimated for the equipment, the reliability module 410 may predict the probability of failures associated with the equipment that may occur in the future.

Further, the remaining useful life model (RUL) 412 may estimate the amount of time or usage left before the equipment is likely to fail or the amount of time left before the equipment would require substantial repair. In one example, the remaining useful life of the equipment may be predicted based on predictive analysis, statistical analysis of historical data, or real-time condition monitoring data, and the like. The equipment usage module 414 may monitor aspects related to the usage of an equipment. For example, the number of times an equipment has been started or stopped, the number of hours the equipment is in operation, the number of hours the equipment is on standby, and the like. In one example, data generated by the sub-modules 400 of the assessment module 310 may be stored in the memory 304 of the AMM system 106 and may be accessible to the other modules of the AMM system 106 and other systems of the facility.

In one example, the Maintenance Request Optimizer (MRO) 312 may access the data generated by the sub-modules 400 to determine a dynamic maintenance schedule. In another example, the MRO 312 may receive operational data values and the events associated with the equipment from another system, for example, from the facility management system of the concerned facility.

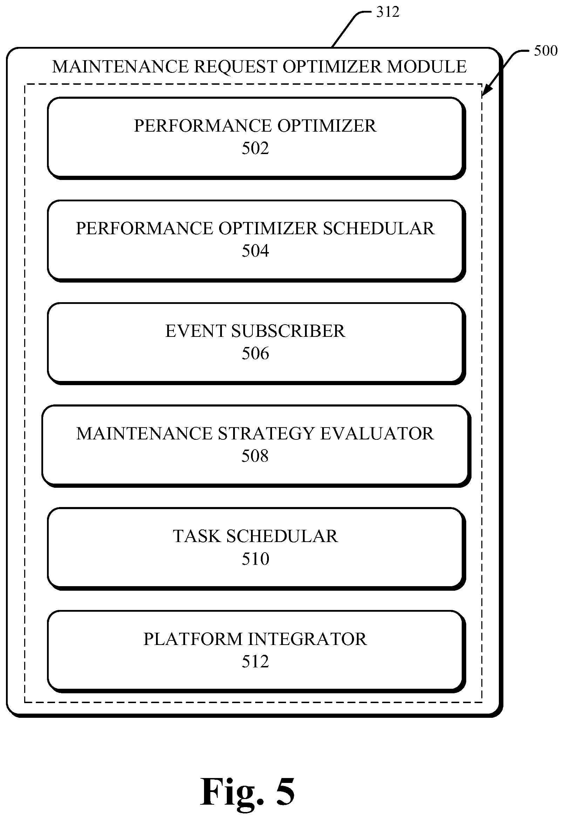

In one example, the MRO 312 may monitor at least one of the operational data values and events associated with the equipment, to determine key performance indicators and a trend pattern corresponding to the equipment. In one example, the MRO 312 may include sub-modules 500 such as a performance optimizer 502 and a performance optimizer schedular 504 as indicated in Fig. 5, in accordance with an example implementation of the present subject matter.

In one example, the performance optimizer 502 may determine key performance indicators and a trend pattern corresponding to the equipment. Key Performance Indicators (KPIs) may be quantifiable measures that are used to evaluate the equipments performance. In one example, the key performance indicators may correspond to at least one of performance, failure, availability, reliability, and life of the equipment. For example, KPIs such as equipment uptime or equipment downtime: measure the proportion of time the said equipment is operational versus the time it is unavailable due to maintenance or breakdowns; mean time between failures: measures the average time elapsed between failures of a system or component; mean time to repair: measures the average time taken to repair a piece of equipment after a failure; failure rate: measures the frequency with which equipment or components fail within a given time period, and the like, may be determined. In another example, the KPIs associated with an equipment may be obtained from the facility management system of the concerned facility.

Further, in addition to determining the KPIs, the performance optimizer 502 may also determine the trend pattern for the equipment. In one example, the performance optimizer 502 may access the data generated by the sub-modules 400 to generate the trend pattern associated with the equipment. In another example, the trend patterns associated with the equipment may be obtained from the facility management system of the concerned facility. In one example, the trend pattern associated with the equipment may be indicative at least of an operational history of the equipment. In one example, the operational history of the equipment may include past operational data values of the equipment, past events associated with the equipment, past operational data values of similar equipments, past events associated with similar equipments, correlation data between operational data values and events that have occurred in the past, and the like. In one example, the trend patterns could also indicate the past maintenance activities that have been carried out, the effect of past maintenance activities carried out on the said equipment or similar equipments on the occurrence of a particular event, anomalies detected in past operation, past operator interventions, and the like. In one example, the trend pattern may also be determined in real time. For example, the trend pattern may include the current operational parameters being monitored, or in a scenario in which an event is being encountered for the first time for the said equipment, the data corresponding to the event may be captured and appended to the existing trend pattern to further refine the trend pattern in real time.

Based on at least one of the key performance indicators and trend patterns determined, the performance optimizer 502 may predict a behavior of the equipment. In another example, the MRO 312 may receive a predicted behavior of an equipment within a facility, for example from the facility management system of the said facility. In one example, the behavior of the equipment may be predicted to analyze how the equipment would behave over a period of time, for example, for a period of next 10 years, or the forthcoming week, or month, and the like. In one example, the predicted behavior of the equipment could be indicative of when the equipment is most likely to breakdown, or when maintenance of the equipment would be required to preempt any possible shut down or stoppage due to mis operation or malfunctioning, or when a possible replacement of a part could be required, and the like. For instance, the predicted behavior of a milling machine commissioned in an automobile manufacturing plant may indicate that based on the current anomalies detected in, for example, the vibration levels of the machine, the milling machine would possibly break-down in the next 40 hours, or that the spindle of the milling machine may be prone to misalignment if the present trend in vibration anomalies continue, or the rate at which the motor is drawing power could possibly lead to overheating of the motor in the next three months, and the like. Based on the predicted behavior of the equipment, a maintenance strategy evaluator 510 may determine a dynamic maintenance schedule for the equipment.

In one example, the performance optimizer schedular 504 may analyze an optimal maintenance time interval for the equipment, the optimal maintenance time interval being a time interval within which if maintenance is carried out, the equipment would have maximum life. In one example, the optimal time interval for maintenance may be determined based on the predicted behavior of the equipment. In another example, the optimal time interval for maintenance of the equipment may be determined based on a plurality of past dynamic maintenance schedules for the equipment, and the like. In one example, the performance optimizer schedular 504 may determine the frequency at which the performance optimizer 502 predicts the behavior of the equipment or generates the dynamic maintenance schedule. In one example, the performance optimizer schedular 504 may cause the performance optimizer 502 to predict the behavior of the equipment every 24 hours, or every week, and the like. Additionally, the MRO 312 includes an event subscriber 508, where the event subscriber 508 may access data corresponding to events that may occur in real time. For example, the events that occur in real-time may include events that have not occurred in the past and are being encountered for the first time by the concerned equipment. The data corresponding to such events may also be considered to predict the behavior of the equipment accurately.

Upon predicting the behavior of the equipment, the maintenance strategy evaluator 510 of the MRO 312 may generate a dynamic maintenance schedule for the equipment in correspondence to the predicted behavior of the equipment. In one example, the maintenance strategy evaluator 510 may optimize different types of maintenance to generate an optimum dynamic maintenance schedule. For example, but not limited to, the maintenance strategy evaluator 510 may optimize preventive maintenance, proactive maintenance, and reliability centric maintenance, and the like, to generate an optimal maintenance schedule. In one example, the dynamic maintenance schedule may include maintenance strategies that include the type of maintenance that needs to be carried out, or the frequency at which the maintenance needs to be carried out, or the list of equipments that need immediate intervention, and the like. The dynamic maintenance schedule may also include one or more tasks, such as maintenance tasks to be executed for optimal maintenance of the equipment.

In one example, the maintenance strategy evaluator 510 may determine the one or more tasks to be included in the dynamic maintenance schedule by analyzing the type of maintenance that needs to be carried out on the concerned equipment for optimal performance as well as minimizing the costs associated with the same. Although the following description has been predominantly discussed with respect to one equipment of the facility, similar principles of the present subject matter would be applicable to the various equipments and processes across multiple facilities of the supply chain network.

In one example, to generate the dynamic maintenance schedule, the maintenance strategy evaluator 510 may compute an equipment index for each equipment of the facility for optimizing maintenance at the equipment level. The maintenance strategy evaluator 510 may then optimize the equipment index by maximizing the equipment index computed to ensure optimal and effective maintenance with minimized costs. In one example the equipment index may be computed in correspondence to at least the availability of the equipment, the performance of the equipment, the reliability of the equipment, and safety of the equipment. In one example, the equipment index may be computed as represented below, in equation (1):

$$\text{Equipment Index} = k1 * \text{Availability Index} + k2 * \text{Performance Index} + k3 * \text{Reliability Index} + k4 * \text{Safety Index} / (k1 + k2 + k3 + k4) \tag{1}$$

Where $k1$, $k2$, $k3$, and $k4$ are constant values, that may be chosen arbitrarily.

In one example, the maintenance strategy evaluator 510 may generate maintenance schedules by optimizing each index contributing to the equipment index, i.e., the availability index, the performance index, the reliability index, and the safety index to ensure different types of maintenance are considered and carried out. In one example the availability index may contribute to the aspect of preventive maintenance associated with the equipment, the performance index may contribute to the aspect of proactive maintenance associated with the equipment, and the reliability index may contribute to the aspect of reliability centric maintenance associated with the equipment.

In one example, the maintenance strategy evaluator 510 aims at maximizing the availability index of an equipment by performing appropriate scheduled maintenance of the equipment. The availability index of the equipment may be computed as a function of various factors, such as number of start/stops, wear and tear, equipment utilization, and the like. In one example, to compute the availability index of an equipment, a condition of the equipment after installation and maintenance is considered as the baseline to determine a current level of degradation of the equipment. In one example, the current level of degradation of the equipment may be assessed based on the one or more parameters, events, KPIs, and trend patterns associated with the equipment. In such an example, the availability index of the equipment may be calculated as depicted below, in equation (2):

$$\text{Availability Index} = (k1 * (1 - \text{number of actual starts} / \text{number of planned starts}) + k2 * (1 - \text{number of hours from last maintenance that equipment is available}/ \text{number of hours planned to operate}) + k3 * (1 - \text{number of hours equipment with health-related event}/ \text{number of hours planned to operate}))/(k1 + k2 + k3) \tag{2}$$

In another example, where the maintenance strategy evaluator 510 utilizes a predictive model to compute the availability index, the level of degradation may be aggregated, and the availability index may be computed as depicted below, in equation (3):

$$\text{Availability Index} = (k1 * (\text{Min}(\text{Predictive Model Health Index}/\text{Max limit}, 0.95) + k2 * (1 - \text{number of hours from last maintenance that equipment is available})/\text{number of hours planned to operate}) )/(k1 + k2) \tag{3}$$

On computing the availability index for the equipment, a cost of availability may be determined. In one example, the cost of availability may be computed as depicted below, in equation (4):

$$\text{Cost of Availability} = \text{Availability Index} * \text{Availability or downtime impact cost} \tag{4}$$

Where the availability or downtime impact cost would be the costs that may be incurred when the equipment is not in operation.

On calculating the availability index and the cost of availability, the maintenance strategy evaluator 510 may generate the dynamic maintenance schedule which includes one or more tasks associated with preventive maintenance of the equipment. In one example, tasks associated with preventive maintenance of the equipment may include routine inspection, routine maintenance, or a task for shaft balancing, visual inspection, and the like. Therefore, the maintenance strategy evaluator 510 identifies appropriate tasks to be carried out in order to increase the availability of the equipment as well as minimize the costs associated with availability of the equipment, thereby providing a flexible-static and dynamic scheduling of preventive maintenance for the equipment.

Similarly, in one example, the maintenance strategy evaluator 510 may optimize proactive maintenance of the equipment by maximizing the performance index depicted in equation (1). To calculate the performance index, an initial benchmark operation for the corresponding equipment is considered. In one example, as discussed above with reference to Fig. 4, the physics module and the OEM module may be utilized to compute a performance loss associated with an equipment. In another example, simulation models such as UniSim Design performance models may be utilized to determine the performance loss associated with an equipment. In addition to determining the performance loss associated with the equipment, costs associated with loss of maintenance or replacement costs may also be computed to determine the one or more tasks to be included in the dynamic maintenance schedule.

The following example illustrates performance loss analysis and optimization for an equipment and is not to be construed as a limitation. For example, the performance assessment for an equipment such as a pump may be considered. In one example, one or more operating data values from sensors coupled to the pump, OEM performance data for the pump, and pre-determined threshold values associated with the one or more operating data values may be utilized to compute the current operating performance. In one example, on computing the current operating performance of the pump, a normalized performance equation for the pump may be determined. From the normalized performance equation, the expected performance of the pump may be calculated and also, the performance coefficient may be determined. Further, from the performance coefficient, the best efficiency performance, or optimal performance may be determined.

In one example, the performance loss from the previous maintenance operation that was carried out, or the operating costs increment measured in, for example, \$/hour, from the baseline may be computed as depicted in equation (5):

$$\delta F_C = \int_0^n (\text{EPi} - \text{OPi}) * \text{COPi} / \text{RunHrs} \qquad (5)$$

Where, COPi represents the cost of operation, EPi represents the expected performance as per the design of the pump at the current operating point, OPi represents the operating performance at current operating point, i represents the sample point, and Runhrs represents the incremental run hours.

Further, in one example, an optimal maintenance interval may be computed based on the performance loss analysis. In one example, the method used to find optimal maintenance interval may be based on the one proposed by Williams as would be understood to a person skilled in the art. Where, the optimal maintenance interval may be determined as depicted in equation (6):

$$T = \sqrt{\frac{2C_M}{C_0 k} + \frac{2i}{8766 \mu T} \left(\frac{C_M}{C_0 k}\right)^2} \qquad (6)$$

Where: T represents the optimal maintenance interval computed in hours; $C_M$ represents the cost of overhaul (currency unit); $C_0$ represents the baseline cost (currency unit/hour) from OEM or benchmark data; k represents the deterioration rate; i represents the interest rate; and $\mu$ represents the utilization rate.

Further, a product of the baseline cost and the deterioration rate of the equipment may be computed as represented below in equation (7):

$$C_0 k = 2 \left(\sum \delta F_C\right) \Delta t / t^2 \qquad (7)$$

where: t represents the running time since last overhaul (hour), $\Delta t$ represents the time interval between two calculations (hour); $\delta F_c$ represents the operating cost increment (\$/h) from baseline. In one example, the implicit equation, equation (6) as depicted above may be solved by Newton's recursive method, where,

$$f(T) = T - \sqrt{\frac{2C_M}{C_0 k} + \frac{2i}{8766\mu T}\left(\frac{C_M}{C_0 k}\right)^2} \tag{8}$$

Then the solution of equation f(T) = 0 can be found by the recursive relation as depicted below in equation (9):

$$T_{n+1} = T_n - \frac{f(T_n)}{f'(T_n)} \tag{9}$$

Further, in one example, the maintenance strategy evaluator 510 may optimize reliability centric maintenance by maximizing the reliability index of the equipment, through appropriate reliability centered maintenance. Reliability of an equipment indicates a probability of the equipment performing its intended function adequately for the intended period of time, when in operation. In one example, reliability of the equipment may be computed as a function of various factors, such as performance deviation from the intended design which may lead to failure, mis-operation, trip to avoid catastrophic failure, and the like. In one example, Failure Mode and Effect Analysis (FMEA) is performed to detect failure or symptoms of failure associated with an equipment. In one example, the failure data required for reliability analysis may be obtained from manufacturers and historical failure data associated with the same equipment or similar types of equipment. Based on such data, the reliability of the equipment may be analyzed, to determine the dynamic maintenance schedule accordingly. In one example, the reliability of the equipment may be computed as indicated in equation (10) as shown below:

$$\text{Reliability of equipment} = \exp(-\lambda t) \tag{10}$$

where $\lambda$ represents the failure rate; and $\lambda$ (MTTF) = Number of Failures / Total Operating time in hrs.

Based on the computed value of reliability of the equipment, the maintenance strategy evaluator 510 may include one or more tasks in the dynamic maintenance schedule which are associated with reliability centric maintenance.

Further, in addition to optimizing maintenance for an equipment within the facility based on different types of maintenance, the maintenance strategy evaluator 510 may also optimize the reliability of the facility as a whole. Accordingly, the maintenance strategy evaluator 510 may consider multiple equipments and processes within the facility simultaneously in order to generate the dynamic maintenance schedule, so that, instead of generating maintenance schedules for every issue observed with each equipment and process of the facility individually, which may be in an adhoc manner, the maintenance strategy evaluator 510 may analyze multiple factors associated with the overall facility to generate the dynamic maintenance schedule. For example, multiple factors such as the predicted behavior of multiple equipments of the facility, an impact they could have on the overall production, the time that would be required for maintenance for different equipments of the facility, a cost that would be associated with multiple maintenance actions, the effect of cascading failures that may result from the failure of one equipment, the costs associated with such cascading failures, and the like. Therefore, the maintenance strategy evaluator 510 may identify and assess various aspects associated with equipments, processes and systems of the facility to determine the optimal maintenance schedule including tasks that needs to be carried out at the right instant for optimal maintenance.

In another example, the maintenance strategy evaluator 510 may evaluate the costs associated with an action, such as a maintenance action, against the cost that could be incurred if a particular maintenance action is delayed or scheduled for a later point of time to generate the maintenance schedule. For example, a lubrication issue which may involve 1-8 hours of maintenance and about $ 5-50K maintenance costs may cascade into a bearing issue which may involve 8-48 hours of maintenance and about $100K maintenance costs, which may further cascade into misalignment or imbalance issues which may involve 2-7 days of maintenance and about $200K maintenance costs, and the like.

In one example, the maintenance strategy evaluator 510 may also assess a cost associated with, or an impact associated with scheduling a maintenance intervention based on the current condition of an equipment at any given point of time versus the costs that could be incurred by leaving the anomaly detected unattended for a specified period of time. For instance, when a loss in efficiency of a gas turbine is determined, the maintenance strategy evaluator 510 may analyze whether the cost of loss in efficiency of the turbine observed over a period of one month would exceed the cost of a maintenance intervention. On performing such an analysis, if it is determined that the cost of maintenance intervention would be much lesser than the cost of loss in efficiency of the turbine, the maintenance strategy evaluator may generate the dynamic maintenance schedule that includes a task, for example, to inspect and possibly replace the air filters or combustion components of the turbine, or the like.

In one example, the MRO 312 may include a task schedular 512 to analyze the one or more tasks included in the dynamic maintenance schedule and accordingly determine when, and in what order the one or more tasks associated with one or more equipments of the facility may be carried out. For example, if there are a total of five tasks that need to be carried out, then an order in which the tasks are to be executed may be decided, such that optimal maintenance occurs in a cost-effective manner. In one example, the task schedular 512 may determine the order based on a priority index of the one or more tasks to be executed. In one example, the priority index of the task may be determined based on the severity of an issue associated with a particular equipment, predicted behavior of an equipment, an impact of a maintenance action on the facility, the impact on operations and production, and the like. For example, in the case of a minor leak detected in a non-critical system, the task schedular might 512 schedule a repair during the next planned downtime rather than immediate intervention. On the other hand, if an issue with, for example spindle bearings was observed and the predicted behavior indicates that the spindle bearings are likely to stop functioning in the next week, and the scheduled maintenance inspection of the spindle bearing is not until after the next six months, the task associated with the spindle bearing may be prioritized ahead of the scheduled maintenance. Further, in one example, the task schedular 512 may also determine a time interval at which the maintenance strategy evaluator may regenerate the dynamic maintenance schedule, for example, on execution of the one or more tasks, to further refine maintenance management of the facility.

On generation of the dynamic maintenance schedule, the Maintenance Request Optimizer 312 may obtain personnel information of the facility to identify appropriate personnel for performing the one or more tasks. In one example, to identify the right personnel for specific tasks and allocate accordingly, various factors such as technical expertise, experience, shift schedules, workload, past performance, specialization, certifications, proximity, and the like, may be considered. In one example, on identifying the right personnel for a task, a maintenance work order in correspondence to the dynamic maintenance schedule may be issued to the personnel of the industrial facility for maintenance of the equipment.

In one example, the maintenance work order generated may be transformed into a format compatible with the specific facility in which the maintenance action is to be performed. Therefore, enabling seamless integration of issuing work orders across multiple facilities of the supply chain network. In one example, to transform the maintenance work into a format compatible with the Computerized Maintenance Management System (CMMS) of the industrial facility concerned, a platform integrator 512 of the MRO 312, in one example, performs schema mapping and value mapping. In schema mapping, the platform integrator 512 may translate the schema of the work order generated by the AMM system 106 into the CMMS schema format, where sing configurable parser is written in a language, such as a liquid template. The liquid template is an open-source template language that may be created for example, by Shopify and written in Ruby. In another example, the schema of the work order generated may be translated into the CMMS schema format using, for example, Excel or Form. In one example, on performing the schema mapping, the performance integrator 512 may perform value mapping to translate values associated with various fields between the two systems, that is, between the AMM system and the CMMS. For example, filed mapping of an equipment ID value between the AMM system and the CMMS may be mapped.

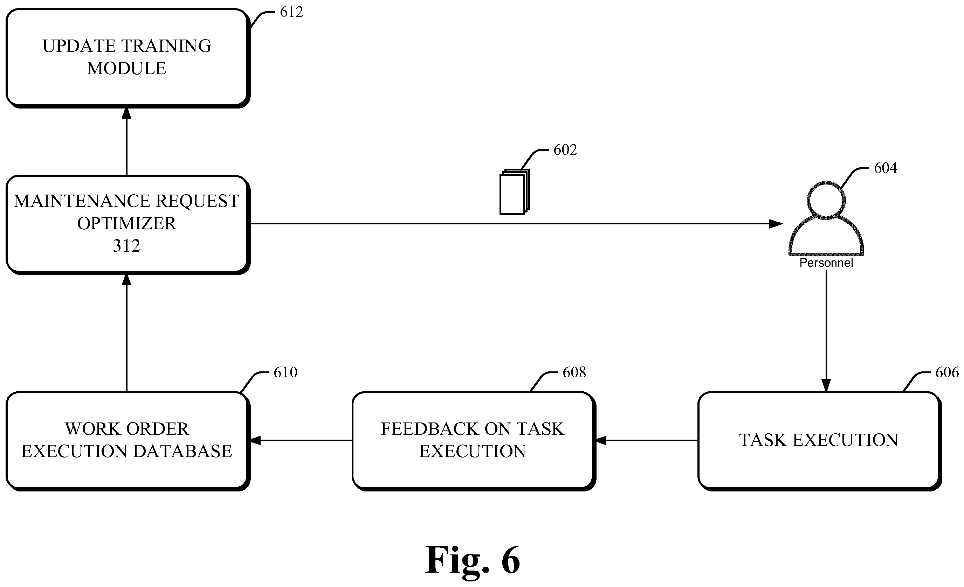

In one example, the work order issued may be sent to the identified personnel of the facility, for example, but not limited to, as a notification on a mobile application, or a message, or an email, or the like. In another example, the CMMS of the facility may forward the work order to the concerned personnel to execute the work order. Further, in one example, the MRO 312 may receive a feedback from the personnel on execution of the work order, as illustrated in Fig. 6. Fig. 6 illustrates an example method for task execution and feedback, in accordance with an example implementation of the present subject matter.

In one example, the work order 602 may include one or more tasks associated with an equipment of the facility. In one example, the personnel 604 of the facility may execute the task 606 and record an outcome of the task being executed 608. The feedback may be indicative of, for example, a current status of the work order being executed, a failure of a task being executed, details associated with completion of the assigned task, the costs involved in execution of the task, the number of personnel involved for executing the task, any additional problem that was encountered for the first time while executing the said task, solutions generated to resolve the new problem encountered, cost associated with the solutions, the number of resources consumed for problem resolution, possible causes for the problem that was encountered, and the like. In one example, the AMM system may label existing trend patterns based on the feedback received. In one example, feedback from the personnel 604 may be provided in the form of, for example but not limited to, snapshots captured at the site by uploading multiple images in a sequential manner covering various aspects of problem resolution, or data entry, or the like. In another example, the outcome of the task executed may be provided to another system for analyzing the outcome, and the analysis may be provided to the MRO 312 to generate an appropriate maintenance schedule. In one example, on the occurrence of an anomaly, which was not factored in while the dynamic maintenance schedule was first generated, the dynamic maintenance schedule may be re-generated to accommodate actions to be taken to address the anomaly in real time. For example, the MRO 312 may issue a corrective work order with updated maintenance tasks to address the anomaly. In one example, the corrective work order may be issued based on the feedback provided by the personnel 604. In another example, the MRO may issue the corrective work order based on the one or more operational data values and events associated with the equipment.

In one example, the feedback received from the personnel 604 may be stored in a work order execution database 610. In one example, the work order execution database 610 may be stored in the memory 304 of the AMM system 106. In another example, the work order execution database 610 may be a part of another system or may be hosted on a server (not shown in the figure) that may be communicatively accessible to the AMM system 106. In another example, the feedback from various tasks and failures recorded at the site may be provided to other personnel of the facility, where the said personnel may further verify the feedback provided by the personnel involved in the task execution and flag appropriate tasks or failure scenarios to the AMM system 106 for further analysis. In one example, personnel of the facility may also provide a possible maintenance schedule that may be included in the dynamic maintenance schedule generated by the MRO based on the feedback obtained from the personnel involved in the task execution.

In one example, the MRO 312 may analyze the feedback provided to correlate the feedback with the existing data, such as trend patterns and key performance indicators determined for the equipment and update the said data of the AMM system 106. In another example, in instances where the equipment encounters a new anomaly or a new problem for the first time, the MRO 312 may generate and store a new record associated with the equipment. In one example, the new record may be a new fault signature for the equipment based capturing the possible causes, and the corresponding resolution that was executed to overcome the problem based on the feedback provided from the facility.

In one example, based on the feedback obtained from execution of the one or more tasks of the maintenance schedule, and other factors, associated with new failure scenarios encountered with the equipment, the MRO 312 may update a training module 612 of the AMM system 106. In one example, based on the trend patterns of the equipment, failure and reliability analysis of the equipment, past maintenance activities, past event data, feedback from task execution, and the like, the training module may generate one or more training programs for various personnel involved in the supply chain network. In one example, the MRO 312 may generate customized training programs or training modules that address specific challenges encountered during the task execution. In one example, the training programs may be determined to train the personnel in a manner in which the task is to be executed. The AMM system 106 may then incorporate these scenarios into the training module 620.

In one example, the training module 620 would generate training programs may for personnel across the facility, for example, personnel involved in task execution, maintenance of equipment, as well as management of the facility, on how various aspects of the facility could be handled. In one example the AMM system may recognize personnel who failed to execute the tasks assigned in an optimal manner and accordingly issue a notification to the said personnel for training. In one example the training module of the AMM system may generate a boundary condition for issuing notifications for operator training, where the AMM system can initialize and run a training exercise for the personnel.

Therefore, techniques of the present subject matter facilitate self-governed maintenance of the industrial facility in an efficient and optimal manner. Dynamic maintenance schedules generated in real-time with active participation of personnel involved in the maintenance of equipment extend the lifecycle of the equipment and improve the overall reliability of industrial plant, in turn reducing the operating costs that may be incurred.

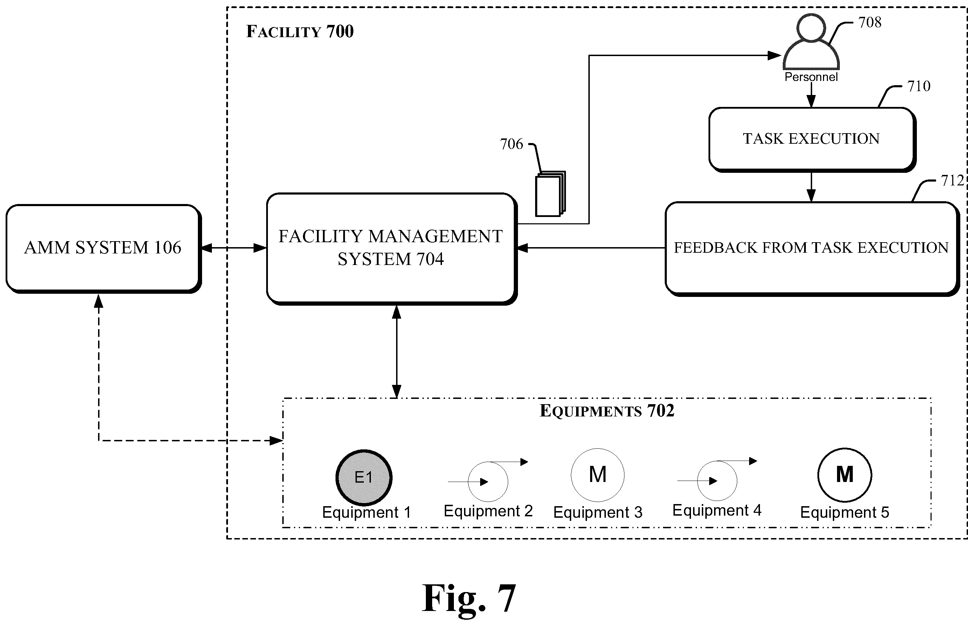

Fig. 7 illustrates an example of autonomous maintenance management of an industrial facility, in accordance with an example implementation of the present subject matter. The following example illustrates autonomous maintenance management of an industrial facility 700, such as an automobile manufacturing unit and is not to be construed as a limitation. In one example, the automobile manufacturing facility 700 may be equipped with multiple equipments 702 such as conveyor belts, motors, gas turbines, milling machines, compressors, and the like. Each of these equipment of may have their own maintenance requirements and operating conditions.

On considering the example of a milling machine, represented as Equipment 1 of facility 700, the AMM system 106 may monitor the one or more operational data values such as vibration data, spindle alignment data, spindle speed, cutting force, coolant temperature, and the like associated with the milling machine. In one example, the AMM system 106 may be a part of the facility 700. In another example, the AMM system may be external to the facility 700 and may be communicatively coupled to the facility management system 704 of the facility 700. Although the following description has been discussed with reference to one operational parameter being monitored for one equipment of the facility, it may be understood that similar principles of the present subject matter may be applicable to various equipments and process across facilitates of the supply chain network.

In one example, the AMM system 106 may monitor the for example, the vibration data associated with the milling machine obtained from vibration sensors integrated with the milling machine to assess the performance of the machine. In one example, the AMM system 106 may compare the operational data values with OEM performance data for the milling machine to assess its performance. In an instance, it may be observed that the vibration values of the milling machine exceed the pre-determined threshold values. This deviation in the vibration values may be detected as an anomaly and may be characterized as an event associated with the milling machine. In one example, based on the vibration data values being monitored in real-time and the anomaly detected, the AMM system 106 may determine Key Performance Indicators and a trend pattern associated with the machine. In one example, the trend pattern associated with the machine may include past operational history of the machine which could include information associated with past instances where a similar anomaly was detected and the like. Additionally, the trend patterns may include previous maintenance logs such as dates and details of scheduled maintenance activities, records of unscheduled repairs or downtime, historical instances of part replacements or upgrades, documentation of error codes or alerts triggered by the machine, event logs, past operational behavior, hours of operation, including peak and off-peak usage, load profiles indicating how heavily the machine is used at different times, faults encountered in the past, the cause and effect of the faults, an impact of historical maintenance activities, and the like.

Further, based on the KPIs determined and the trend patterns associated with the milling machine, the AMM system 106 may predict a behavior of the equipment. For example, the predictions may indicate that if the current vibration levels continue to increase, it could lead to premature bearing failure, or that the spindle may reach the end of its useful life in the next two months, or that the lubrication quality may degrade at a faster rate than expected due to increased load and the like.

In one example, based on the predicted behavior of the milling machine, the AMM system 106 may generate a dynamic maintenance schedule for the milling machine. In one example, the dynamic maintenance schedule may include scheduling of various maintenance activities to ensure optimal performance of the milling machine, such as adjusting the lubrication maintenance interval from quarterly to bi-monthly, scheduling a tool change in one week during a planned downtime to avoid mid-operation due to tool failure, scheduling a bearing inspection every two weeks, and the like. In one example, the dynamic maintenance schedule may also include one or more maintenance tasks to be executed such as inspecting the gearbox for signs of excessive wear and damage, or changing the lubrication oil, or aligning the spindle, and the like. In one example, the one or more maintenance tasks associated with the milling machine may be issued to the facility management system in the form of a work order 706. The AMM system 106 may generate the work order 706 in a format compatible with the facility management system 704 of the facility 700, and the facility management system 704 may further issue the work order 706 to the concerned personnel 708. In another example, the AMM system 106 may issue the work order 706 to the personnel 708 directly in the form of, for example, a notification through a mobile application, and the like, for task execution 710.

In one example, the AMM system 106 may receive feedback 712 message from the personnel on execution of the tasks assigned. In one example, the feedback message may be indicative of the outcome of the task being executed. Based on the feedback message, the AMM system 106 may update a training module to generate a training program including multiple training exercises to train the personnel in a manner in which the task is to be executed. For example, the AMM system 106 may generate a training exercise related to how a spindle misalignment should be corrected and notify the personnel to undergo the training program.

Therefore, in this manner, techniques of the present subject matter facilitate self-governed maintenance of the industrial facility in an efficient and optimal manner by generating dynamic maintenance schedules in real-time with active participation of personnel involved in the maintenance of equipment. Further, techniques of the present subject matter facilitate extending the lifecycle of the equipment and improve the overall reliability of industrial plant, in turn reducing the operating costs that may be incurred. Additionally, allocation of a task to the right personnel, at the right time minimizes the probable loss as well as the costs associated, that may be incurred. Furthermore, techniques of the present subject matter include operator trainings in addition to autonomous maintenance in order to provide a comprehensive approach to equipment maintenance i.e., without systemic breakdowns, small stops or slow running, defects, and the like, thereby ensuring a safe working environment.

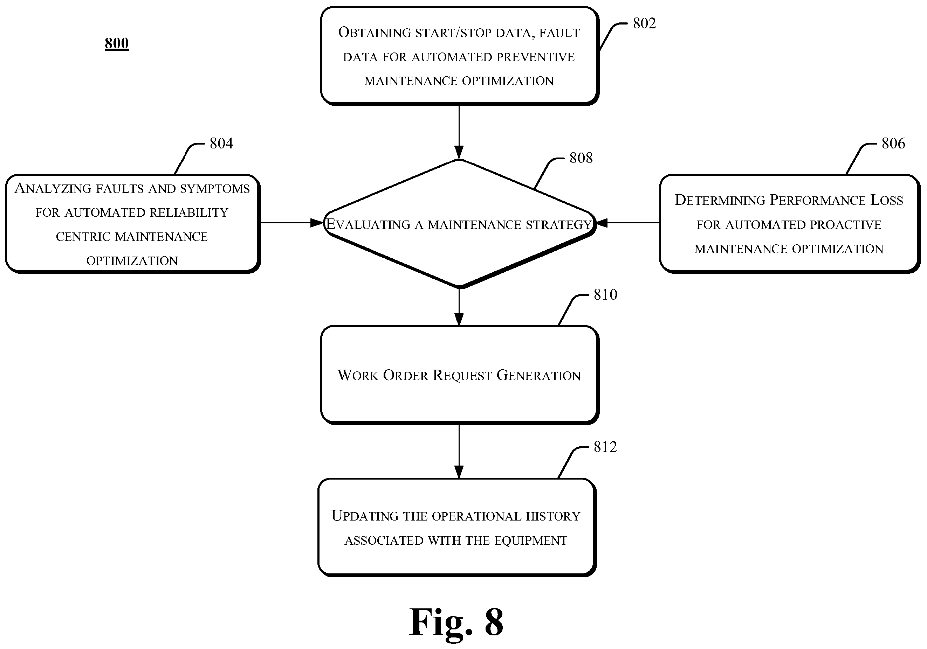

Fig. 8 illustrates a method 800 for maintenance strategy evaluation, in accordance with an example implementation of the present subject matter. The order in which the method 800 is described is not intended to be construed as a limitation, and any number of the described method blocks can be combined in any order to implement method 800 or an alternative method. Additionally, individual blocks may be deleted from the method 800 without departing from the spirit and scope of the subject matter described herein. Furthermore, the method 800 may be implemented in any suitable hardware, computer readable instructions, firmware, or combination thereof. For discussion, the method 800 is described with reference to the implementations illustrated in Fig(s). 1-7.

At block 802, the method 800 includes obtaining start/stop data corresponding to an equipment of the facility, fault data of the facility for automated preventive maintenance optimization.

At block 804, the method 800 includes analyzing faults and symptoms for reliability centric maintenance optimization.

At block 806, the method 800 includes determining performance loss for automated proactive maintenance optimization.

At block 808, the method 800 includes evaluating the different types of maintenance options and generating an optimal maintenance schedule to increase the reliability of the equipment and the facility, while minimizing the costs associated with the maintenance actions.

At block 810, the method 800 includes generating a work order based on the one or more tasks included in the optimal maintenance schedule generated.

At block 812, the method 800 includes updating the operation history associated with the equipment for future scenarios.

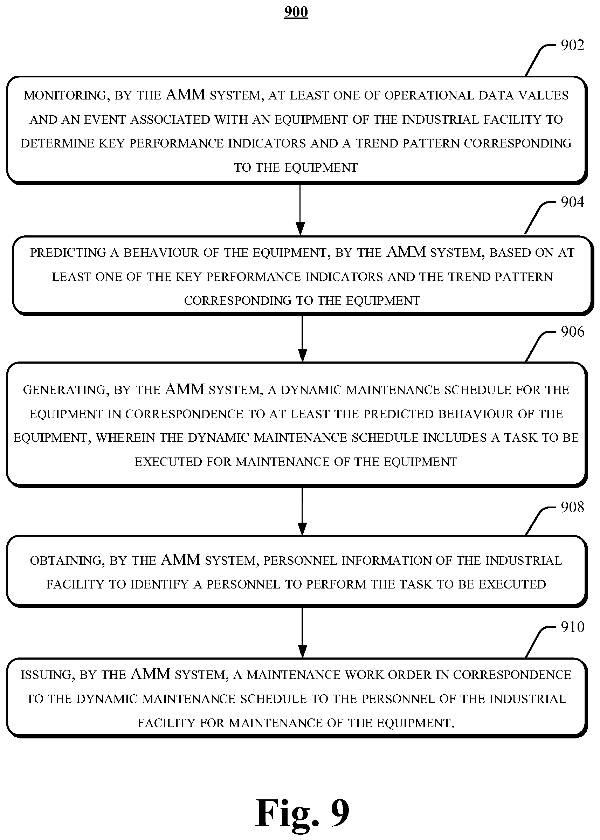

Fig. 9 illustrates a method 900 for autonomous maintenance management, in accordance with an example implementation of the present subject matter. The order in which the method 900 is described is not intended to be construed as a limitation, and any number of the described method blocks can be combined in any order to implement method 900 or an alternative method. Additionally, individual blocks may be deleted from the method 900 without departing from the spirit and scope of the subject matter described herein. Furthermore, the method 900 may be implemented in any suitable hardware, computer readable instructions, firmware, or combination thereof. For discussion, the method 900 is described with reference to the implementations illustrated in Fig(s). 1-7.

At block 902, the method 900 includes monitoring, by the AMM system, at least one of operational data values and an event associated with an equipment of the industrial facility to determine key performance indicators and a trend pattern corresponding to the equipment. In one example, the event is characterized by deviations in the operational data values from a pre-determined threshold value, and the trend pattern is indicative at least of operational history of the equipment. In one example, key performance indicators are determined by performing at least one of a parameter analysis of the operational data values, a fault analysis of the equipment, and a reliability analysis of the equipment.

At block 904, the method 900 includes predicting a behavior of the equipment, by the AMM system, based on at least one of the key performance indicators and the trend pattern corresponding to the equipment.

At block 906, the method 900 includes generating, by the AMM system, a dynamic maintenance schedule for the equipment in correspondence to at least the predicted behavior of the equipment, where the dynamic maintenance schedule includes a task to be executed for maintenance of the equipment. In one example, the AMM system analyzes, a plurality of past dynamic maintenance schedules for the equipment to determine an optimal maintenance time interval, the optimal maintenance time interval being a time interval within which if maintenance is carried out, the equipment would have maximum life.

At block 908, the method 900 includes obtaining, by the AMM system, personnel information of the industrial facility to identify personnel to perform the task to be executed.

At block 910, the method 900 includes issuing, by the AMM system, a maintenance work order in correspondence to the dynamic maintenance schedule to the personnel of the industrial facility for maintenance of the equipment. In one example, the AMM system identifies an anomaly associated with the equipment and issues a corrective work order to address the anomaly. In one example, the AMM system generates the maintenance work order in a format compatible with a Computerized Maintenance Management System (CMMS) of the industrial facility.

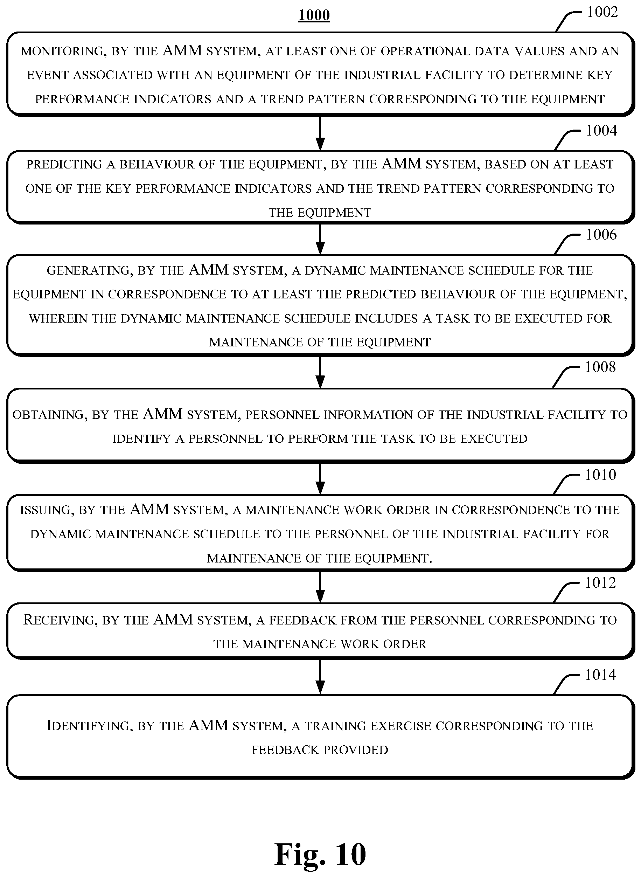

Fig. 10 illustrates another method 1000 for autonomous maintenance management, in accordance with an example implementation of the present subject matter. The order in which the method 1000 is described is not intended to be construed as a limitation, and any number of the described method blocks can be combined in any order to implement method 1000 or an alternative method. Additionally, individual blocks may be deleted from the method 1000 without departing from the spirit and scope of the subject matter described herein. Furthermore, the method 1000 may be implemented in any suitable hardware, computer readable instructions, firmware, or combination thereof. For discussion, the method 1000 is described with reference to the implementations illustrated in Fig(s). 1-7.

At block 1002, the method 1000 includes monitoring, by the AMM system, at least one of operational data values and an event associated with an equipment of the industrial facility to determine key performance indicators and a trend pattern corresponding to the equipment. In one example, the event is characterized by deviations in the operational data values from a pre-determined threshold value, and the trend pattern is indicative at least of operational history of the equipment.

At block 1004, the method 1000 includes predicting a behavior of the equipment by the AMM system, based on at least one of the key performance indicators and the trend pattern corresponding to the equipment.

At block 1006, the method 1000 includes generating, by the AMM system, a dynamic maintenance schedule for the equipment in correspondence to at least the predicted behavior of the equipment, where the dynamic maintenance schedule includes a task to be executed for maintenance of the equipment.

At block 1008, the method 1000 includes obtaining, by the AMM system, personnel information of the industrial facility to identify personnel to perform the task to be executed.

At block 1010, the method 1000 includes issuing, by the AMM system, a maintenance work order in correspondence to the dynamic maintenance schedule to the personnel of the industrial facility for maintenance of the equipment.

At block 1012, the method 1000 includes receiving, by the AMM system, feedback from the personnel corresponding to the maintenance work order. In one example, on receiving feedback from the personnel corresponding to the maintenance work order, the AMM system may update a work order execution database with the feedback received.

At block 1014, the method 1000 includes identifying, by the AMM system, a new scenario encountered by the personnel based on the feedback provided and generating a training scenario corresponding to the new scenario identified.

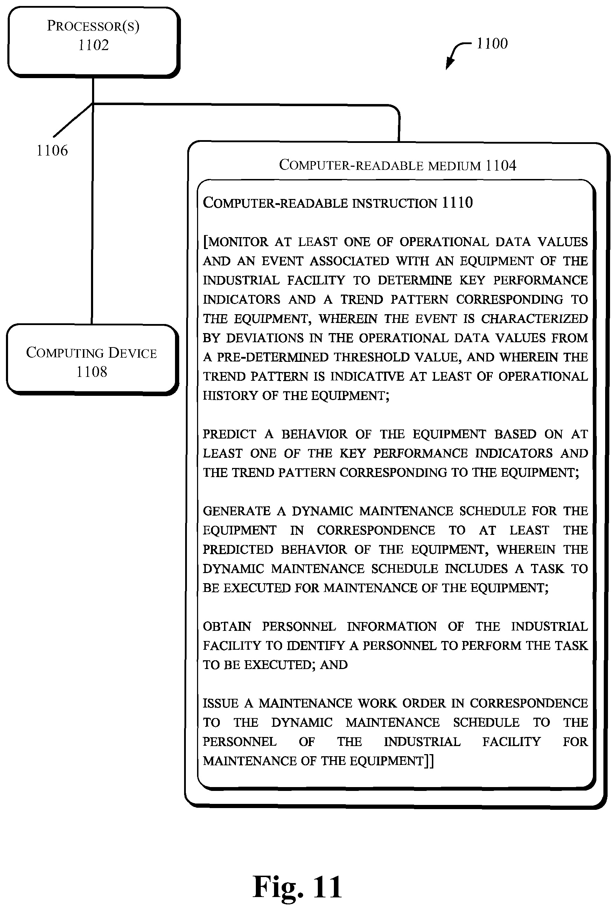

Fig. 11 illustrates a non-transitory computer-readable medium for autonomous maintenance management of an industrial facility, in accordance with an example of the present subject matter. In an example, the computing environment 1100 includes processor 1102 communicatively coupled to a non-transitory computer readable medium 1104 through communication link 1106. In an example implementation, the computing environment 1100 may be for example, the system for autonomous maintenance management system 106. In an example, the processor 1102 may have one or more processing resources for fetching and executing computer-readable instructions from the non-transitory computer readable medium 1104. The processor 1102 and the non-transitory computer readable medium 1104 may be implemented, for example, in the system for autonomous maintenance management.

The non-transitory computer readable medium 1104 may be, for example, an internal memory device or an external memory. In an example implementation, the communication link 1106 may be a network communication link, or other communication links, such as a PCI (Peripheral component interconnect) Express, USB-C (Universal Serial Bus Type-C) interfaces, I2C (Inter-Integrated Circuit) interfaces, and the like. In an example implementation, the non-transitory computer readable medium 1104 includes a set of computer readable instructions 1110 which may be accessed by the processor 1102 through the communication link 1106 and subsequently executed for autonomous maintenance management of the facility. The processor(s) 1102 and the non-transitory computer readable medium 1104 may also be communicatively coupled to a computing device 1108 over the network.

Referring to Fig. 11, in an example, the non-transitory computer readable medium 1104 includes computer readable instructions 1110 that cause the processor 1102 to monitor at least one of operational data values and an event associated with an equipment of the industrial facility to determine key performance indicators and a trend pattern corresponding to the equipment, where the event is characterized by deviations in the operational data values from a predetermined threshold value, and where the trend pattern is indicative at least of operational history of the equipment.

The instructions 1110 may further cause the processor 1102 to predict a behavior of the equipment based on at least one of the key performance indicators and the trend pattern corresponding to the equipment. Further, the instructions 1110 may cause the processor 1102 to generate a dynamic maintenance schedule for the equipment in correspondence to at least the predicted behavior of the equipment, where the dynamic maintenance schedule includes one or more tasks to be executed for maintenance of the equipment.

The instructions 1110 may further cause the processor 1102 to obtain personnel information of the industrial facility to identify personnel to perform the task to be executed and issue a maintenance work order in correspondence to the dynamic maintenance schedule to the personnel of the industrial facility for maintenance of the equipment. Further, the instructions 1110 may also cause the processor 1102 to further determine a training program to train the personnel in a manner in which the task is to be executed.

Although examples of the present subject matter have been described in language specific to methods and/or structural features, it is to be understood that the present subject matter is not limited to the specific methods or features described. Rather, the methods and specific features are disclosed and explained as examples of the present subject matter.

## Claims

1. A method implemented by an autonomous maintenance management, AMM, system of an industrial facility, the method comprising:

   monitoring, by the AMM system, at least one of operational data values and an event associated with an equipment of the industrial facility to determine key performance indicators and a trend pattern corresponding to the equipment, wherein the event is **characterized by** deviations in the operational data values from a predetermined threshold value, and wherein the trend pattern is indicative at least of operational history of the equipment;
   predicting a behaviour of the equipment, by the AMM system, based on at least one of the key performance indicators and the trend pattern corresponding to the equipment;
   generating, by the AMM system, a dynamic maintenance schedule for the equipment in correspondence to at least the predicted behaviour of the equipment, wherein the dynamic maintenance schedule includes a task to be executed for maintenance of the equipment;
   obtaining, by the AMM system, personnel information of the industrial facility to identify a personnel to perform the task to be executed; and
   issuing, by the AMM system, a maintenance work order in correspondence to the dynamic maintenance schedule to the personnel of the industrial facility for maintenance of the equipment.

2. The method of claim 1, wherein the AMM system is configurable to generate the dynamic maintenance schedule at predefined time intervals.

3. The method of claim 1, wherein the key performance indicators correspond to at least one of performance, failure, availability, reliability, and life of the equipment.

4. The method of claim 1, wherein the dynamic maintenance schedule comprises one or more tasks, wherein each task amongst the one or more tasks is assigned with a priority index.

5. The method of claim 1 further comprising:

   identifying an anomaly associated with the equipment; and
   issuing a corrective work order to address the anomaly.

6. The method of claim 1 further comprising:

   receiving a feedback from the personnel corresponding to the maintenance work order; and
   updating a work order execution database with the feedback received.

7. The method of claim 1 further comprising analyzing, by the AMM system, a plurality of past dynamic maintenance schedules for the equipment to determine an optimal maintenance time interval, the optimal maintenance time interval being a time interval within which if maintenance is carried out, the equipment would have maximum life.

8. The method of claim 1 further comprising determining, by the AMM system, a training program to train the personnel in a manner in which the task is to be executed.

9. The method of claim 1, wherein the issuing comprises generating the maintenance work order in a format compatible with a Computerized Maintenance Management System, CMMS, of the industrial facility.

10. The method of claim 1, wherein the key performance indicators are determined by performing at least one of a parameter analysis of the operational data values, a fault analysis of the equipment, and a reliability analysis of the equipment.

11. A system for autonomous maintenance management of an industrial facility, the system comprising:
    a maintenance request optimizer, MRO, to:

    receive key performance indicators and a trend pattern associated with an equipment of the industrial facility, wherein the key performance indicators are determined from at least one of operational data values and an event associated with the equipment, wherein the event is **characterized by** deviations in the operational data values from a pre-determined threshold value, and wherein the trend pattern is indicative at least of operational history of the equipment;
    receive a predictive behaviour of the equipment based on at least one of the key performance indicators and the trend pattern corresponding to the equipment;
    generate a dynamic maintenance schedule for the equipment in correspondence to at least the predicted behaviour of the equipment, wherein the dynamic maintenance schedule includes a task to be executed for maintenance of the equipment;
    obtain personnel information of the industrial facility to identify a personnel to perform the task to be executed; and
    issue a maintenance work order in correspondence to the dynamic maintenance schedule to the personnel of the industrial facility for maintenance of the equipment.

12. The system of claim 11, wherein the MRO is to:

    identify an anomaly associated with the equipment; and
    issue a corrective work order to address the anomaly.

13. The system of claim 11, wherein the MRO is to:

    receive a feedback from the personnel corresponding to the maintenance work order; and
    update a work order execution database with the feedback received.

14. The system of claim 11, wherein the MRO is to analyze a plurality of past generated dynamic maintenance schedules for the equipment to determine an optimal maintenance time interval, wherein the optimal maintenance time interval corresponds to a time interval within which if maintenance is carried out, the equipment would have maximum life and minimal loss.

**15.** A non-transitory computer-readable medium comprising instructions for autonomous maintenance management of an industrial facility, the instructions being executable by a processor to:

monitor at least one of operational data values and an event associated with an equipment of the industrial facility to determine key performance indicators and a trend pattern corresponding to the equipment, wherein the event is **characterized by** deviations in the operational data values from a pre-determined threshold value, and wherein the trend pattern is indicative at least of operational history of the equipment;
predict a behaviour of the equipment based on at least one of the key performance indicators and the trend pattern corresponding to the equipment;
generate a dynamic maintenance schedule for the equipment in correspondence to at least the predicted behaviour of the equipment, wherein the dynamic maintenance schedule includes a task to be executed for maintenance of the equipment;
obtain personnel information of the industrial facility to identify a personnel to perform the task to be executed; and
issue a maintenance work order in correspondence to the dynamic maintenance schedule to the personnel of the industrial facility for maintenance of the equipment.

Fig. 1

**Fig. 2**

EP 4 672 104 A1

106

AUTONOMOUS MAINTENANCE MANAGEMENT SYSTEM

PROCESSOR(S)
302

MEMORY
304

INTERFACE(S)
306

MODULES 308

ASSESSMENT MODULE
310

MAINTENANCE REQUEST OPTIMIZER
312

DATA
316

# Fig. 3

Fig.4

EP 4 672 104 A1

312

500

## MAINTENANCE REQUEST OPTIMIZER MODULE

PERFORMANCE OPTIMIZER
502

PERFORMANCE OPTIMIZER SCHEDULAR
504

EVENT SUBSCRIBER
506

MAINTENANCE STRATEGY EVALUATOR
508

TASK SCHEDULAR
510

PLATFORM INTEGRATOR
512

# Fig. 5

EP 4 672 104 A1

```
┌─────────────────────┐  ╱ 612
│   UPDATE TRAINING   │
│      MODULE         │
└─────────────────────┘
          ▲
          │
┌─────────────────────┐
│ MAINTENANCE REQUEST │ ──────────────────────────────►  Personnel  ╱ 604
│     OPTIMIZER       │
│        312          │                    ╱ 602
└─────────────────────┘                                        │
          ▲                                                     ▼
┌─────────────────────┐   ┌─────────────────────┐   ┌─────────────────────┐
│    WORK ORDER       │◄──│ FEEDBACK ON TASK    │◄──│   TASK EXECUTION    │
│ EXECUTION DATABASE  │   │    EXECUTION        │   │                     │
└─────────────────────┘   └─────────────────────┘   └─────────────────────┘
       ╱ 610                    ╱ 608                      ╱ 606
```

## Fig. 6

**Fig. 7**

Fig. 8

**900**

902

MONITORING, BY THE AMM SYSTEM, AT LEAST ONE OF OPERATIONAL DATA VALUES AND AN EVENT ASSOCIATED WITH AN EQUIPMENT OF THE INDUSTRIAL FACILITY TO DETERMINE KEY PERFORMANCE INDICATORS AND A TREND PATTERN CORRESPONDING TO THE EQUIPMENT

904

PREDICTING A BEHAVIOUR OF THE EQUIPMENT, BY THE AMM SYSTEM, BASED ON AT LEAST ONE OF THE KEY PERFORMANCE INDICATORS AND THE TREND PATTERN CORRESPONDING TO THE EQUIPMENT

906

GENERATING, BY THE AMM SYSTEM, A DYNAMIC MAINTENANCE SCHEDULE FOR THE EQUIPMENT IN CORRESPONDENCE TO AT LEAST THE PREDICTED BEHAVIOUR OF THE EQUIPMENT, WHEREIN THE DYNAMIC MAINTENANCE SCHEDULE INCLUDES A TASK TO BE EXECUTED FOR MAINTENANCE OF THE EQUIPMENT

908

OBTAINING, BY THE AMM SYSTEM, PERSONNEL INFORMATION OF THE INDUSTRIAL FACILITY TO IDENTIFY A PERSONNEL TO PERFORM THE TASK TO BE EXECUTED

910

ISSUING, BY THE AMM SYSTEM, A MAINTENANCE WORK ORDER IN CORRESPONDENCE TO THE DYNAMIC MAINTENANCE SCHEDULE TO THE PERSONNEL OF THE INDUSTRIAL FACILITY FOR MAINTENANCE OF THE EQUIPMENT.

# Fig. 9

1000 — 1002

MONITORING, BY THE AMM SYSTEM, AT LEAST ONE OF OPERATIONAL DATA VALUES AND AN EVENT ASSOCIATED WITH AN EQUIPMENT OF THE INDUSTRIAL FACILITY TO DETERMINE KEY PERFORMANCE INDICATORS AND A TREND PATTERN CORRESPONDING TO THE EQUIPMENT

— 1004

PREDICTING A BEHAVIOUR OF THE EQUIPMENT, BY THE AMM SYSTEM, BASED ON AT LEAST ONE OF THE KEY PERFORMANCE INDICATORS AND THE TREND PATTERN CORRESPONDING TO THE EQUIPMENT

— 1006

GENERATING, BY THE AMM SYSTEM, A DYNAMIC MAINTENANCE SCHEDULE FOR THE EQUIPMENT IN CORRESPONDENCE TO AT LEAST THE PREDICTED BEHAVIOUR OF THE EQUIPMENT, WHEREIN THE DYNAMIC MAINTENANCE SCHEDULE INCLUDES A TASK TO BE EXECUTED FOR MAINTENANCE OF THE EQUIPMENT

— 1008

OBTAINING, BY THE AMM SYSTEM, PERSONNEL INFORMATION OF THE INDUSTRIAL FACILITY TO IDENTIFY A PERSONNEL TO PERFORM THE TASK TO BE EXECUTED

— 1010

ISSUING, BY THE AMM SYSTEM, A MAINTENANCE WORK ORDER IN CORRESPONDENCE TO THE DYNAMIC MAINTENANCE SCHEDULE TO THE PERSONNEL OF THE INDUSTRIAL FACILITY FOR MAINTENANCE OF THE EQUIPMENT.

— 1012

RECEIVING, BY THE AMM SYSTEM, A FEEDBACK FROM THE PERSONNEL CORRESPONDING TO THE MAINTENANCE WORK ORDER

— 1014

IDENTIFYING, BY THE AMM SYSTEM, A TRAINING EXERCISE CORRESPONDING TO THE FEEDBACK PROVIDED

# Fig. 10

PROCESSOR(S)
1102

1100

1106

COMPUTING DEVICE
1108

COMPUTER-READABLE MEDIUM 1104

COMPUTER-READABLE INSTRUCTION 1110

[MONITOR AT LEAST ONE OF OPERATIONAL DATA VALUES AND AN EVENT ASSOCIATED WITH AN EQUIPMENT OF THE INDUSTRIAL FACILITY TO DETERMINE KEY PERFORMANCE INDICATORS AND A TREND PATTERN CORRESPONDING TO THE EQUIPMENT, WHEREIN THE EVENT IS CHARACTERIZED BY DEVIATIONS IN THE OPERATIONAL DATA VALUES FROM A PRE-DETERMINED THRESHOLD VALUE, AND WHEREIN THE TREND PATTERN IS INDICATIVE AT LEAST OF OPERATIONAL HISTORY OF THE EQUIPMENT;

PREDICT A BEHAVIOR OF THE EQUIPMENT BASED ON AT LEAST ONE OF THE KEY PERFORMANCE INDICATORS AND THE TREND PATTERN CORRESPONDING TO THE EQUIPMENT;

GENERATE A DYNAMIC MAINTENANCE SCHEDULE FOR THE EQUIPMENT IN CORRESPONDENCE TO AT LEAST THE PREDICTED BEHAVIOR OF THE EQUIPMENT, WHEREIN THE DYNAMIC MAINTENANCE SCHEDULE INCLUDES A TASK TO BE EXECUTED FOR MAINTENANCE OF THE EQUIPMENT;

OBTAIN PERSONNEL INFORMATION OF THE INDUSTRIAL FACILITY TO IDENTIFY A PERSONNEL TO PERFORM THE TASK TO BE EXECUTED; AND

ISSUE A MAINTENANCE WORK ORDER IN CORRESPONDENCE TO THE DYNAMIC MAINTENANCE SCHEDULE TO THE PERSONNEL OF THE INDUSTRIAL FACILITY FOR MAINTENANCE OF THE EQUIPMENT]]

**Fig. 11**

Europäisches Patentamt

European Patent Office

Office européen des brevets

# EUROPEAN SEARCH REPORT

**Application Number**

EP 25 18 6044

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/090297 A1 (JADHAV SNEHA R [US] ET AL) 23 March 2023 (2023-03-23) <br> * paragraph [0078] - paragraph [0080] * <br> * paragraph [0083] - paragraph [0085] * <br> * paragraph [0088] * <br> * paragraph [0096] * <br> * paragraph [0099] * <br> ----- | 1-15 | INV. <br> G06Q10/06 <br> G05B23/02 <br> G06F11/00 <br> G06Q10/20 <br><br> ADD. <br> G06F11/07 |
| X | US 2022/317676 A1 (REAUME DANIEL J [US]) 6 October 2022 (2022-10-06) <br> * paragraph [0009] - paragraph [0010] * <br> * paragraph [0022] * <br> * paragraph [0024] * <br> * paragraph [0037] * <br> * paragraph [0052] - paragraph [0053] * <br> ----- | 1-15 | |
| X | US 8 266 066 B1 (WEZTER MICHAEL [US] ET AL) 11 September 2012 (2012-09-11) <br> * column 48, line 61 - line 64 * <br> * column 10, line 10 - column 16, line 41 * <br> ----- | 1-9, 11-15 | |

|  | TECHNICAL FIELDS SEARCHED (IPC) |
|---|---|
|  | G06Q <br> G06F <br> G05B |

The present search report has been drawn up for all claims

| Place of search | Date of completion of the search | Examiner |
|---|---|---|
| Munich | 29 July 2025 | Hartmann, Janka |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 6044

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2025

| Patent document cited in search report | | Publication date | Patent family member(s) | | Publication date |
|---|---|---|---|---|---|
| US 2023090297 | A1 | 23-03-2023 | CN | 115879905 A | 31-03-2023 |
| | | | EP | 4152227 A1 | 22-03-2023 |
| | | | US | 2023090297 A1 | 23-03-2023 |
| US 2022317676 | A1 | 06-10-2022 | AU | 2022246525 A1 | 19-10-2023 |
| | | | CA | 3213723 A1 | 06-10-2022 |
| | | | EP | 4315201 A1 | 07-02-2024 |
| | | | US | 2022317676 A1 | 06-10-2022 |
| | | | WO | 2022212082 A1 | 06-10-2022 |
| US 8266066 | B1 | 11-09-2012 | US | 8266066 B1 | 11-09-2012 |
| | | | WO | 03021501 A2 | 13-03-2003 |

EPO FORM P0459

For more details about this annex : see Official Journal of the European Patent Office, No. 12/82